Europäisches Patentamt

European Patent Office

Office européen des brevets

(19)

(11) EP 1 345 064 A2

(12) EUROPEAN PATENT APPLICATION

(43) Date of publication:
17.09.2003 Bulletin 2003/38

(51) Int Cl.⁷: G02B 27/00

(21) Application number: 03004904.3

(22) Date of filing: 06.03.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 08.03.2002 JP 2002063290

(71) Applicant: FUJI PHOTO FILM CO., LTD.
Kanagawa-ken, 250-0193 (JP)

(72) Inventor: Miyagawa, Ichirou,
Fuji Photo Film Co., Ltd.
Ashigarakami-gun, Kanagawa (JP)

(74) Representative: Klunker . Schmitt-Nilson . Hirsch
Winzererstrasse 106
80797 München (DE)

(54) **Laser beam exposure apparatus with array refracting element**

(57)     The present invention provides an exposure apparatus which can improve quality of an image formed on a recording medium. The exposure apparatus comprises an array refracting element which divides a laser beam in a sub-scanning direction on a light path of the laser beam between an emission opening of the laser beam and a recording film, and in which a pair of refracting members are formed to be arranged in a line, and a focal distance f of a condenser lens, a wavelength λ of the light beam, and a width d for the division direction of a divided region of the laser beam in the refracting member are determined so that a value (f×λ)/d obtained by dividing a product value of the focal distance f and the wavelength λ by the width d is not more than a predetermined value.

FIG.1

**Description**

BACKGROUND OF THE INVENTION

Field of the Invention

The present invention relates to an exposure apparatus, particularly relates to the exposure apparatus forming an image on a recording medium by scanning exposure.

Description of the Related Art

In the conventional way, there has been utilized an exposure recording apparatus which is adapted to record the two-dimensional image on a photosensitive material in such a manner that a laser beam, which is modulated corresponding to image data of the image to be recorded in the photosensitive material, is scanned in a sub-scanning direction orthogonal to a main scanning direction while a drum equipped with the photosensitive material (recording medium) on its outer peripheral surface is rotated in the main scanning direction.

In such kind of exposure recording apparatus, in order to record the image with resolution decreased, there is adopted a method in which a recording pitch is increased for the sub-scanning direction while a spot diameter of the laser beam is enlarged on a surface of the photosensitive material, or a pixel comprising the same image data is repeatedly recorded as much as the resolution is decreased without changing the spot diameters and the recording pitches. On the other hand, in the case where the image is recorded with the resolution increased, there is adopted the contrary method to the above-described method.

However, since it is necessary to drive a lens of an optical system and the like by using a drive mechanism in order to enlarge and reduce the spot diameter of the laser beam in that way, there is a problem that the apparatus is enlarged and cost is increased. Further, in the case where the resolution is decreased by recording repeatedly the pixel comprising the same image data as much as the resolution is decreased, there is a problem that recording speed can not be increased because the recording pitch for the sub-scanning direction is constant.

In order to solve these problems, there is a technique disclosed in Japanese Patent Application Laid-Open (JP-A) No. 2000-284206 filed by the applicant of the invention, in which a light emitted from a light source is divided into plurally and a multiple condensing points generating component generating multiple condensing points on the recording medium through a condensing optical system with respect to the sub-scanning direction of the recording medium and a sub-scanning control component controlling a recording interval of the sub-scanning direction corresponding to the resolution are provided. When the light radiated from the light source is focused on the recording medium through the condensing optical system to record the image, while a size of a beam spot is adjusted by controlling the number of condensing points which are divided in the sub-scanning direction by the multiple condensing points generating component to be generated corresponding to the resolution of the recording image, the recording interval of the beam spot in the sub-scanning direction is adjusted, whereby making it possible to record efficiently the image corresponding to the resolution.

In the technique, a polarizing optical element comprising a uniaxial crystal or a deviation prism is applied as the multiple condensing points generating component.

However, in the case where the polarizing optical element comprising the uniaxial crystal is applied as the multiple condensing points generating component in the technique disclosed in JP-A No. 2000-284206, there is a problem that the cost is increased because the uniaxial crystal is expensive.

In the case where the deviation prism is applied as the multiple condensing points generating component in the technique disclosed in JP-A No. 2000-284206, there is a problem that image quality of the recording image sometimes deteriorates.

That is to say, when the deviation prism is applied as the multiple condensing points generating component in the technique stated in the above described publication, a state of fuzziness of the laser beam becomes asymmetry relative to the optical axis direction at a position shifted forward and backward in an optical axis direction (depth direction) from a focal point of the laser beam which is divided by the deviation prism and condensed by a condenser lens.

This is a phenomenon generated by a state where the divided lights are separating each other in the case where an incident side of the light is viewed from the focal point or a state where the divided lights approach, cross and then separate in the case where an outgoing side of the light is viewed from the focal point, because lights divided by the deviation prism are focused at different positions in division directions of each focal position by the condenser lens. The phenomenon causes a tolerance of an arrangement position of the recording medium to the depth direction to be reduced, and, even if the arranging position shifts slightly in the depth direction, the image quality of the recording image to the recording medium sometimes deteriorates.

In order to solve these problems, there is a conventional technique, which provides an exposure apparatus forming the image on the recording medium by scanning exposure, comprising a light source radiating the light beam which emits light over a broad area with respect to at least the sub-scanning direction, and a condensing optical system condensing the light beam radiated from the light source on the recording medium. In the exposure apparatus, an array refracting element in which refracting members having a unit surface shape that divides one light beam into two light beams are arranged in the shape of an array in pairs, is arranged so that a division direction of the light beam is substantially parallel to a broad area direction of the light beam radiated from the light source.

Accordingly, the light beams divided into two light beams by an array pair of the array refracting element comprise lights of the number of array pairs respectively. Since one condensing spot consists of the condensing beams of the number of array pairs, in the case where the divided light beams are superimposed by the condenser lens while each two of the condensing spots are shifted at the focal position, the state of fuzziness of each light beam becomes symmetry relative to the optical axis direction when the incident side of the light beam is viewed from the focal position and when the outgoing side of the light beam is viewed from the focal position, and, as a result, the image quality of the recording image can be improved.

Since the array refracting element can be formed by any material which can divide the light beam into two light beams, it is not always necessary to employ the uniaxial crystal required in the case where the light beam is separated corresponding to a polarization direction, whereby enabling the refracting element to be formed with low cost.

For the purpose of improvement of the recording speed, there is an exposure recording apparatus in which end portions of outgoing exits of the laser beam in each optical fiber are arranged in parallel in the sub-scanning direction in an exposure head to perform simultaneously the exposure by the plurality of laser beams radiated from the plurality of light sources, while each of laser beams radiated from a plurality of light source is guided into the single exposure head by an optical fiber.

In the case where the technique stated in JP-A No. 2000-284206 is applied to such kind of exposure recording apparatus, since one laser beam can be divided plurally to perform the exposure, the recording speed can be further improved.

However, in the exposure recording apparatus employing such optical fiber, the polarization direction of the laser beam emitted from the optical fiber is sometimes changed from moment to moment by external force displacement such as vibrational displacement, pressure displacement, torsion displacement, and temperature displacement, applied to the optical fiber. In this case, there is a problem that the quantities of lights of the laser beams divided plurally compete each other and the condensing spot is formed in an unstable shape, so that the image quality of the recording image is deteriorated.

In order to solve the problem, a conventional technique provides an exposure apparatus comprising a light source radiating the light, a condensing optical system condensing a light emitted from the light source on a recording medium, and a polarization separating element separating the light into the two lights whose polarization directions are orthogonal to each other. In the exposure apparatus, a polarization direction control element is formed in such a manner that a plurality of half-wave plates are respectively arranged between the light source and the polarization separating element at predetermined intervals in an entire incident region of the light beam so that a crystal optical axis is slanted at an angle within a predetermined region including 45° relative to the polarization direction of the light beam separated by the polarization separating element.

The above-described crystal optical axis is also referred to as "optical axis", however, hereinafter uniformly stated as "crystal optical axis" in the specification. Though the angle within the predetermined region including 45° is ideally 45°, the angle within various kinds of tolerances such as the angle within the tolerance in the manufacturing of the polarization direction control element, and the angle within the tolerance with respect to the apparatus to which the polarization direction control element is applied.

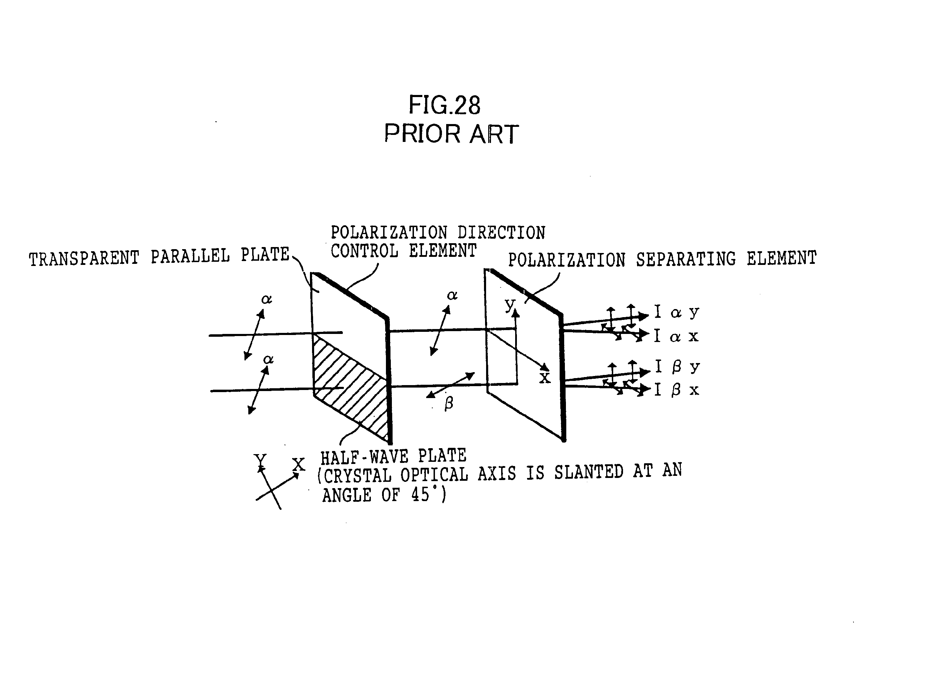

Referring to Fig. 28, a principle of the technique will be described briefly. In the description, the case where the polarization direction control element of the technique comprises, in combination, a half-wave plate and a transparent parallel plate not influencing largely the polarization direction of the transmitted light will be described. As shown in Fig. 28, when the polarization direction of the light separated by the polarization separating element is set to (x,y), the polarization direction control element is assumed to be arranged so that the direction of the crystal optical axis of the half-wave plate is set to the oblique direction by 45° relative to (x,y) in the polarization direction control element. In this case, a coordinate system of the crystal optical axis is set to (X,Y) in the half-wave plate. In this case, on the assumption that there is no difference in light transmittance between the transparent parallel plate and the half-wave plate of the polarization direction control element or the difference in the light transmittance is so small that the difference can be neglected, the polarization direction control element is arranged at a position where the quantity of light is distributed so that a ratio of the quantity of the light incident to the half-wave plate to the quantity of the light which is not incident thereto becomes 1:1.

In the case where an electric field vector $\alpha$ of the light incident to the polarization direction control element is set to $\alpha = (a,b)$ and where the light incident to the half-wave plate is considered, letting a matrix for rotating an (x,y) coordinate system by 45° be A, a matrix for delaying the light of a Y coordinate by a half-wave phase be B, and a matrix for returning the coordinate system (x, y) to the original position by the -45 ° rotation be C, each of the matrices is expressed by the following formulas.

$$\alpha = \begin{pmatrix} a \\ b \end{pmatrix}$$

$$A = \begin{pmatrix} \cos 45° & \sin 45° \\ -\sin 45° & \cos 45° \end{pmatrix} = \frac{\sqrt{2}}{2} \begin{pmatrix} 1 & 1 \\ -1 & 1 \end{pmatrix}$$

$$B = \begin{pmatrix} 1 & 0 \\ 0 & e^{-1 \cdot \pi} \end{pmatrix} = \begin{pmatrix} 1 & 0 \\ 0 & -1 \end{pmatrix}$$

$$C = \begin{pmatrix} \cos 45° & -\sin 45° \\ \sin 45° & \cos 45° \end{pmatrix} = \frac{\sqrt{2}}{2} \begin{pmatrix} 1 & -1 \\ 1 & 1 \end{pmatrix}$$

Accordingly, an electric field vector $\beta$ of the light after passing through the half-wave plate is expressed as follows.

$$\beta = C \cdot B \cdot A \cdot \alpha = \begin{pmatrix} b \\ a \end{pmatrix}$$

Since the electric filed vectors $\alpha$ and $\beta$ are set so that a distribution of the quantity of light is 1:1 each of the quantities of light I$\alpha$ and I$\beta$ is expressed as follows.

$$I\alpha = \begin{pmatrix} I & \alpha & x \\ I & \alpha & y \end{pmatrix} = \frac{\alpha^2}{2} = \frac{1}{2} \begin{pmatrix} a^2 \\ b^2 \end{pmatrix}$$

$$I\beta = \begin{pmatrix} I & \beta & x \\ I & \beta & y \end{pmatrix} = \frac{\beta^2}{2} = \frac{1}{2} \begin{pmatrix} b^2 \\ a^2 \end{pmatrix}$$

Accordingly, when lights are added, the quantity of light I is expressed as follows.

$$I = \begin{pmatrix} I & x \\ I & y \end{pmatrix} = I\alpha + I\beta = \frac{1}{2} \begin{pmatrix} a^2 & + & b^2 \\ a^2 & + & b^2 \end{pmatrix}$$

The result shows that, in the case where the light passing through the half-wave plate and the light not passing through the half-wave plate are added, the light which is separated in each polarization direction of x and y by the polarization separating element is separated in an equal quantity of light.

The transparent parallel plate provided in the polarization direction control element is not always necessary, other members such as an ND (Neutral Density) filter, which do not largely affect the polarization direction of the incident light can be also applied instead of the transparent parallel plate, and it is also possible to provide none of these members in the polarization direction control element.

On the basis of the above-described principle, the polarization direction control element the above-described technique is one which is provided in an upstream side of the optical axis direction of the light of the polarization separating element separating the light into two light beams whose polarization direction are orthogonal to each other. Because the half-wave plate is formed to be arranged such that, in the case where the polarization separating element is provided in the upstream side of the optical axis direction thereof, a part of the light is transmitted and the crystal optical axis slants at the angle within the predetermined region including 45° relative to the polarization direction of the light separated by the polarization separating element, when the polarization direction control element is used in combination with the polarization separating element, the light beam can be separated into equal quantities of lights by the polarization separating element, which allows the image quality of the recording image to be improved in the exposure recording apparatus using the polarization separating element.

However, in another above-described technique, because diffraction light is generated in a divided portion of the light beam in the array refracting element, the shape of the condensing spot of the light beam is deteriorated on the recording medium by the influence, as a result, there is a problem that the quality of the image formed on the recording medium is deteriorated.

Also in the technique, because diffraction light is generated in an edge portion of the half-wave plate constituting the polarization direction control element, the shape of the condensing spot of the light beam is deteriorated on the recording medium by the influence, as a result, there is a problem that the quality of the image formed on the recording medium is deteriorated.

A generating mechanism of the diffraction light will be described. The diffraction light generated in the case where a plurality of pairs of refracting members for dividing the light beam are arranged periodically will be described.

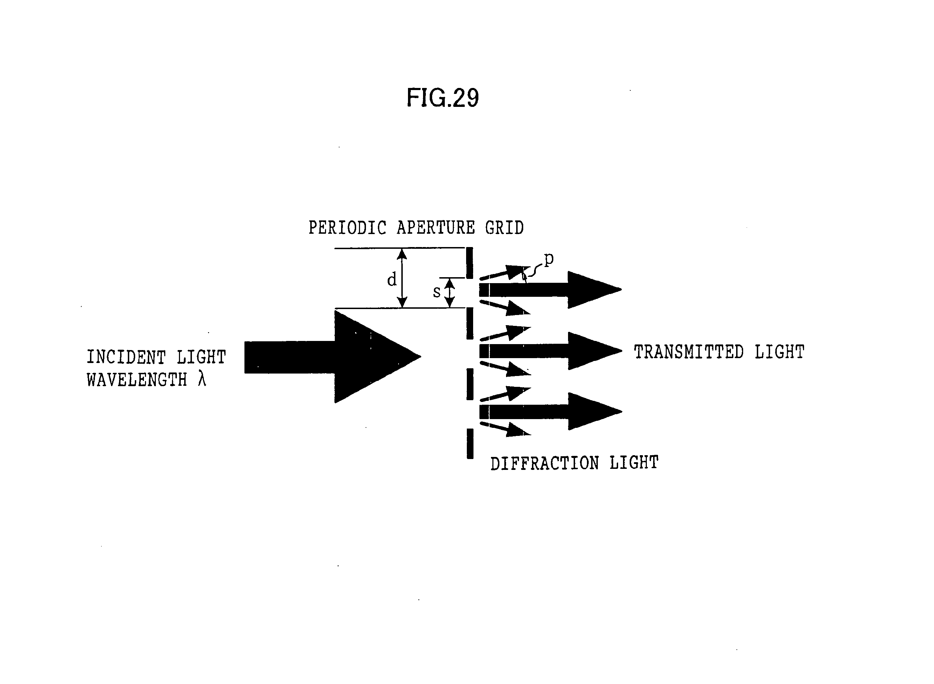

In this case, since the light beam is refracted into two directions by the plurality of pairs of refracting members, when only the light beam emitted toward one of the two directions is considered, the light beam transmitted through the refracting member exhibits the same characteristics as in the case where the light beam passes through a periodic aperture grid shown in Fig. 29.

Accordingly, a diffraction formula obtained in the case where the light passes through the periodic aperture grid may be solved. In the case where the uniform light is incident to the periodic aperture grid, an intensity distribution of the diffraction light I (p) is expressed by the following equation (1). A diffraction angle pn (rad) of n-th diffraction light is expressed by the following equation (2).

$$\mathrm{I(p)} \;=\; \left[\frac{\sin\left(\dfrac{N \cdot k \cdot d \cdot p}{2}\right)}{\sin\left(\dfrac{k \cdot d \cdot p}{2}\right)}\right]^2 \cdot \left[\frac{\sin\left(\dfrac{k \cdot s \cdot p}{2}\right)}{\dfrac{k \cdot s \cdot p}{2}}\right]^2 \qquad (1)$$

$$pn = \frac{n \cdot \lambda}{d} \qquad (2)$$

Provided that N is the number of periodic aperture grids (refracting members), k is a wavenumber of light, d is a width (mm) of the periodic aperture grid (refracting member), s is an aperture width (mm), p is a diffraction angle (rad), n is an order of the diffraction light, and $\lambda$ is a wavelength (mm) of the incident light.

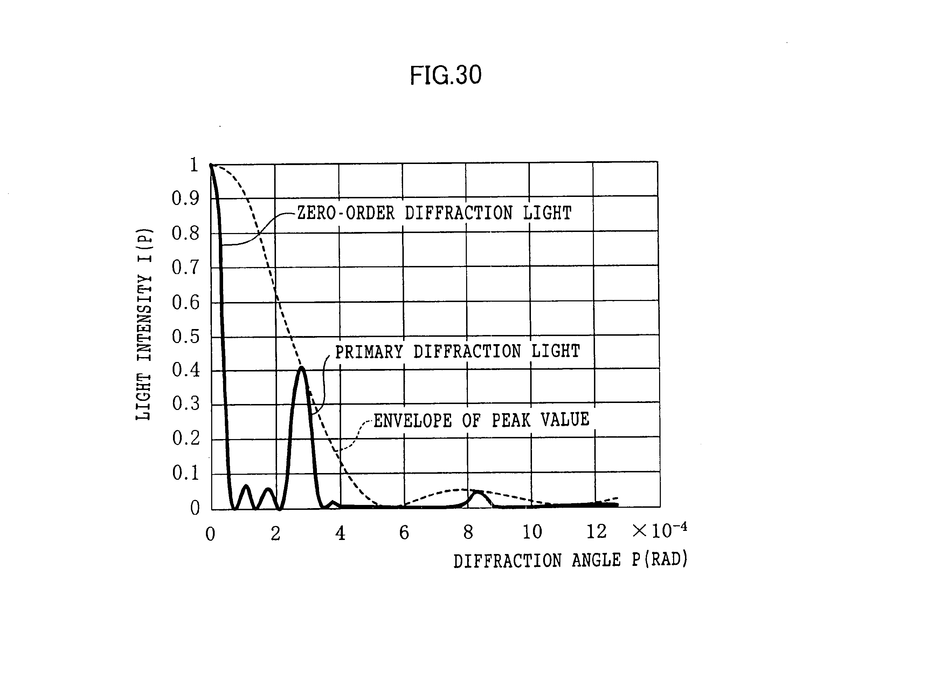

A graph obtained in the case where the equations are solved under the following conditions is shown as an example in Fig. 30. A horizontal axis in Fig. 30 is the diffraction angle p, a vertical axis is the light intensity I(p).

(Condition)

The width of the periodic aperture grid d = 3 (mm), the aperture width s = 1.5 (mm), and the wavelength of the light $\lambda$ = 0.83 ($\mu$m)

In this case, the diffraction angle p1 of the primary diffraction light is expressed as follows.

$$p1 = 2.8 \times 10^{-4} \text{ (rad)}$$

As shown in Fig.30, the light intensity I of the primary diffraction light in this case is as large as about 40% relative to a zero-order light, it is found that the influence on the condensing spot is significantly large as compared with the diffraction light of other order numbers. Consequently, in the case where the shift between the condensing spot and the primary diffraction light is large, the quality of the image formed on the recording medium is significantly deteriorated.

SUMMARY OF THE INVENTION

In view of the foregoing problems, it is an object of the present invention to provide an exposure apparatus which can improve the quality of the image formed on the recording medium.

In order to achieve the above-described object, according to a first aspect of the invention, there is provided an exposure apparatus which forms an image on a recording medium by scanning exposure, comprising a light source radiating a light beam emitting light over a broad area for at least a sub-scanning direction, a condensing optical system including a first lens which is placed between the light source and the recording medium and makes the light beam radiated from the light source a substantial parallel light flux and a second lens which is placed between the first lens and the recording medium and condenses the light beam onto the recording medium, and an array refracting element in which refracting members having a unit surface shape that divides one light beam into two beams are arranged so as to be in the shape of an array in pair units and which is placed between the first lens and the second lens so that a division direction of the light beam is substantially parallel to a broad area direction of the light beam radiated from the light source, wherein a focal distance f of the second lens, a wavelength $\lambda$ of the light beam, and a width d for the division direction of the divided region of the light beam in the refracting member are determined so that a value (f$\times\lambda$)/d obtained by dividing a product value f$\times\lambda$ of the focal distance f and the wavelength $\lambda$ by the width d is not more than a predetermined value.

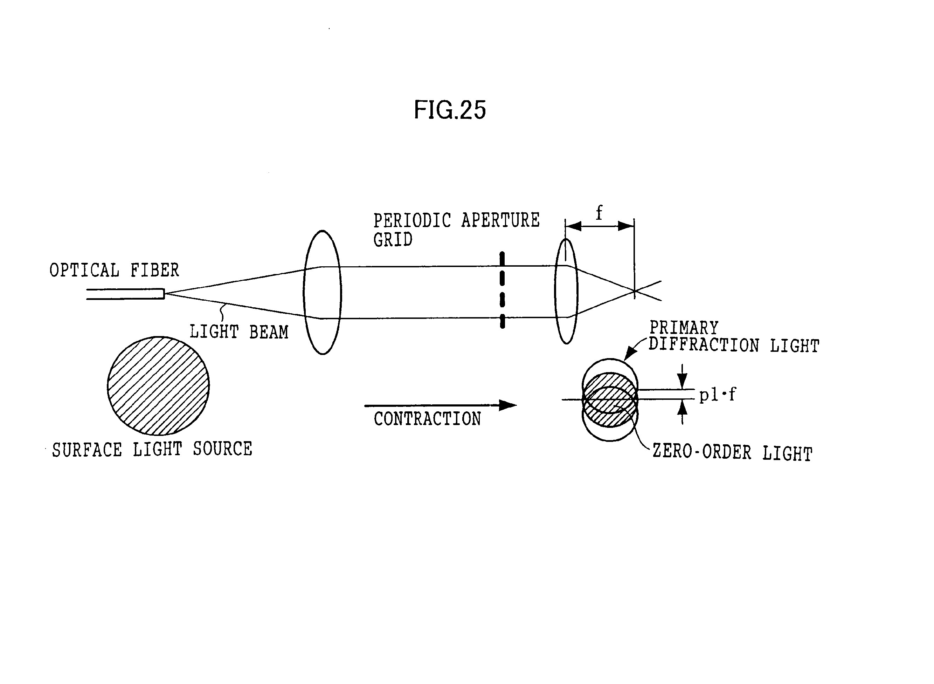

A principle of the invention will be described referring to the figures. Fig. 25 shows a schematic view in the case where the light beam radiated from the light source having a broad light-emitting plane is re-imaged by the condenser lens whose focal distance is f after passing through the periodic aperture grid (also to Fig. 29). In this case, as shown in Fig. 25, the shift between the central position of the condensing spot of the light beam and the central position of the primary diffraction light is expressed by p1 $\times$ f.

The diffraction angle p1 of the primary diffraction light is expressed by the following equation (3) derived from the above-described equation (2).

$$p1 = \frac{1 \cdot \lambda}{d} = \frac{\lambda}{d} \tag{3}$$

Accordingly, the shift between the central position of the condensing spot and the central position of the primary diffraction light is expressed by the following equation (4).

$$p1 \times f = \frac{f \times \lambda}{d} \tag{4}$$

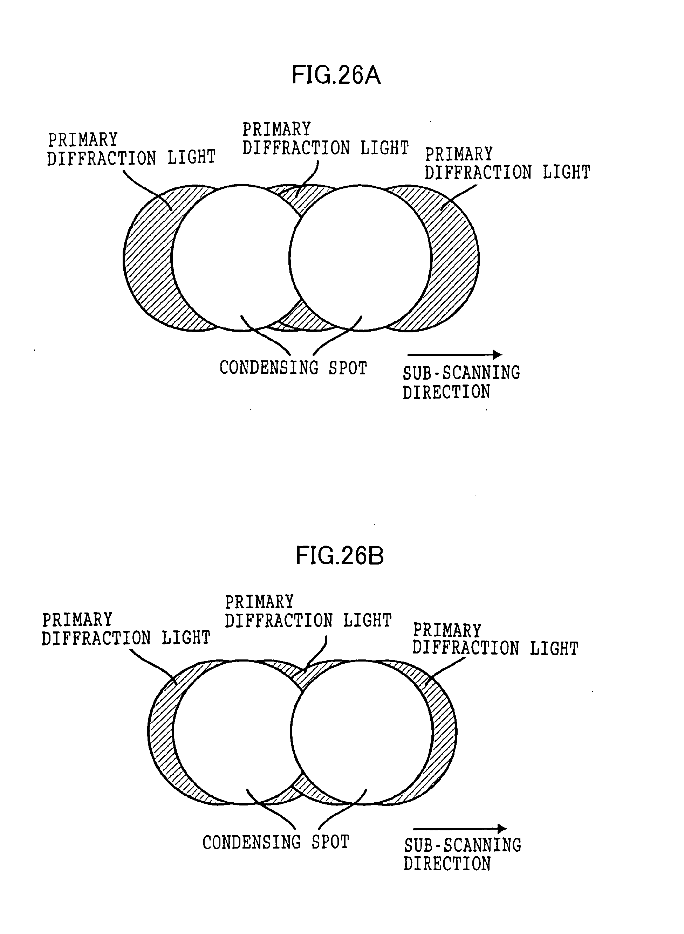

In the case where the shift is large, as shown as an example in Fig. 26A, since visibility of the primary diffraction light is large, the quality of the image formed on the recording medium is significantly deteriorated. On the contrary, in the case where the shift is small, as shown as an example in Fig. 26B, since visibility of the primary diffraction light is small, the quality of the image formed on the recording medium is improved, as compared with the case of the large shift.

It is preferred from a point of view of the image quality that the shift between the condensing spot and the primary diffraction light be reduced. For this purpose, the focal distance f, the wavelength $\lambda$, and the width d of the periodic aperture grid may be determined so that a value represented by a right-hand side of the equation (4) is reduced. The width d of the periodic aperture grid in this case corresponds to the width d for the division direction of the divided region of the light beam in the refracting member.

On the basis of the above-described principle, according to the exposure apparatus of the first aspect, when the light beam radiated from the light source radiating the light beam emitting light in the broad area for at least the sub-scanning direction is made the substantial parallel light flux by the first lens of the condensing optical system and then condensed on the recording medium by the second lens of the condensing optical system, the light beam is divided in the broad area direction of the light beam, namely in the sub-scanning direction by the array refracting element in which the refracting members having the unit surface shape that divides one light beam into two beams are arranged so as to be in the shape of the array in pair units and which is placed between the first lens and the second lens so that the division direction of the light beam is substantially parallel to the broad area direction of the light beam radiated from the light source. The light source includes various kinds of semiconductor lasers. The first lens includes various kinds of collimator lenses and the second lens includes various kinds of condenser lenses respectively.

In the first aspect of the invention, the focal distance f of the second lens, the wavelength $\lambda$ of the light beam, and the width d for the division direction of the divided region of the light beam in the refracting member constituting the array refracting member are determined so that the value (f$\times\lambda$)/d obtained by dividing the product value f$\times\lambda$ of the focal distance f and the wavelength $\lambda$ by the width d is not more than the predetermined value.

As described above, according to the exposure apparatus of the first aspect, the exposure apparatus comprises the light source radiating the light beam emitting light in the broad area for at least a sub-scanning direction, the condensing optical system including the first lens which is placed between the light source and the recording medium and makes the light beam radiated from the light source a substantial parallel light flux and the second lens which is placed between the first lens and the recording medium and condenses the light beam onto the recording medium, and the array refracting element in which the refracting members having the unit surface shape that divides one light beam into two beams are arranged so as to be in the shape of the array in pair units and which is placed between the first lens and the second lens so that the division direction of the light beam is substantially parallel to the broad area direction of the light beam radiated from the light source, and, in the apparatus, the focal distance f of the second lens, the wavelength $\lambda$ of the light beam, and the width d for the division direction of the divided region of the light beam in the refracting member are determined so that the value $(f \times \lambda)/d$ obtained by dividing the product value $f\lambda$ of the focal distance f and the wavelength $\lambda$ by the width d is not more than the predetermined value. Thus, the shift between the condensing spot and the primary diffraction light to be reduced, and consequently, the quality of the image formed on the recording medium can be improved.

On the other hand, in order to achieve the above-described object, according to a second aspect of the invention, there is provided an exposure apparatus which forms an image on a recording medium by the scanning exposure, comprising a light source radiating a light beam emitting light over a broad area for at least a sub-scanning direction, a condensing optical system including a first lens which is placed between the light source and the recording medium and makes the light beam radiated from the light source a substantial parallel light flux and a second lens which is placed between the first lens and the recording medium and condenses the light beam onto the recording medium, and an array refracting element in which refracting members having a unit surface shape that divides one light beam into two beams are arranged so as to be in the shape of an array in pair units and which is placed between the second lens and the recording medium so that a division direction of the light beam is substantially parallel to a broad area direction of the light beam radiated from the light source, wherein a distance R between the array refracting element and the recording medium, a wavelength $\lambda$ of the light beam, and a width d for the division direction of the divided region of the light beam in the refracting member are determined so that a value $(R \times \lambda)/d$ obtained by dividing a product value $R \times \lambda$ of the distance R and the wavelength $\lambda$ by the width d is not more than a predetermined value.

That is to say, the exposure apparatus of the second aspect has the almost same construction as the exposure apparatus of the first aspect, and differs therefrom only in that the array refracting element is arranged between the second lens and the recording medium.

In this case, though the diffraction angle p1 of the primary diffraction light is the same as the equation (3), the shift between the central position of the condensing spot and the central position of the primary diffraction light is expressed by the following equation (5).

$$p1 \times R = \frac{R \times \lambda}{d} \tag{5}$$

Therefore, in order to reduce the shift between the condensing spot and the primary diffraction light, the distance R, the wavelength $\lambda$, and the width d may be determined so that a value represented by a right-hand side of the equation (5) is reduced. In the exposure apparatus of the second aspect, the distance R, the wavelength $\lambda$, and the width d are determined so that the value $(R \times \lambda)/d$ obtained by dividing the product value $R \times \lambda$ of the distance R and the wavelength $\lambda$ by the width d is not more than the predetermined value.

The light source of the invention includes various kinds of semiconductor lasers. The first lens of the invention includes various kinds of collimator lenses and the second lens of the invention includes various kinds of condenser lenses respectively.

As described above, according to the exposure apparatus stated in the second aspect, the exposure apparatus comprises the light source radiating the light beam emitting light in the broad area for at least the sub-scanning direction, the condensing optical system including the first lens which is placed between the light source and the recording medium and makes the light beam radiated from the light source a substantial parallel light flux and the second lens which is placed between the first lens and the recording medium and condenses the light beam onto the recording medium, and the array refracting element in which the refracting members having the unit surface shape that divides one light beam into two beams are arranged so as to be in the shape of the array in pair units and which is placed between the second lens and the recording medium so that the division direction of the light beam is substantially parallel to the broad area direction of the light beam radiated from the light source, and, in the apparatus, the distance R between the array refracting element and the recording medium, the wavelength $\lambda$ of the light beam, and the width d for the division direction of the divided region of the light beam in the refracting member are determined so that the value $(R \times \lambda)/d$ obtained by dividing the product value $R \times \lambda$ of the distance R and the wavelength $\lambda$ by the width d is not more than the predetermined value. Thus, the shift between the condensing spot of the light beam and the primary diffraction light can be reduced, and consequently, the quality of the image formed on the recording medium can be improved.

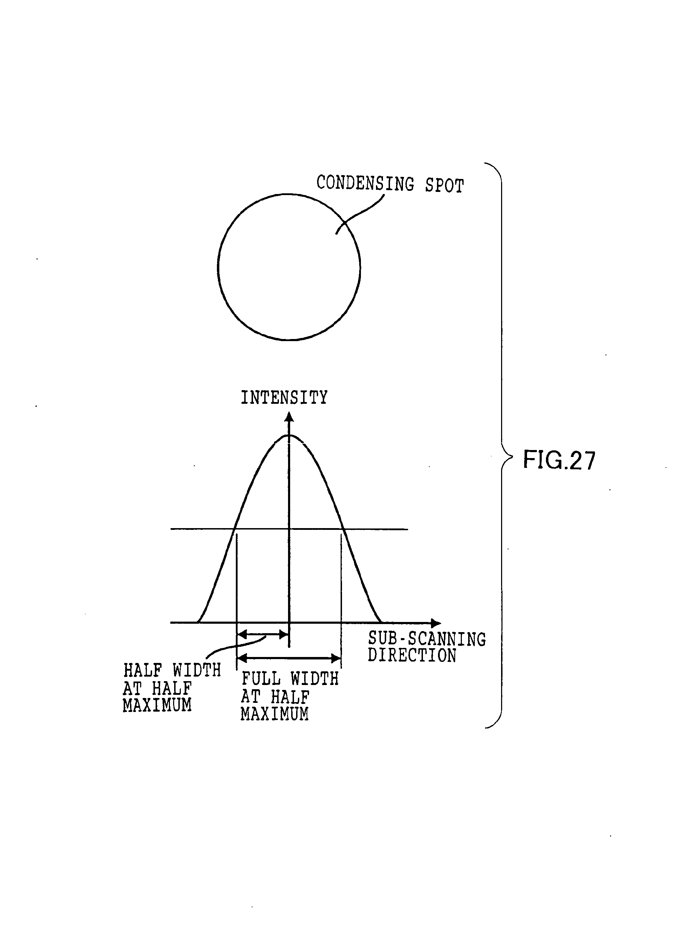

It has been found by experiments by the inventor of the invention that, when the shift between the condensing spot and the primary diffraction light exceeds half width at half maximum of the condensing spot shown as an example in Fig. 27, the influence of the shift on the condensing spot of the primary diffraction light is enlarged and the shift also causes a problem in the image quality.

It is preferred that the above-described predetermined value in the first aspect or the second aspect of the invention be the half width at half maximum of the condensing spot of the light beam onto the recording medium.

This allows deterioration of the image quality by the influence of the primary diffraction light to be securely prevented.

The influence of the shift between the condensing spot and the primary diffraction light on the image quality depends on the resolution of the image formed on the recording medium and the like to a certain extent and the required image quality is not always constant, so that the above-described predetermined value is not limited to the half width at half maximum and the predetermined value can also be a value near the half width at half maximum (for example, a ±10% value of the half width at half maximum).

On the other hand, in order to achieve the above-described object, according to a third aspect of the invention, there is provided an exposure apparatus which forms an image on a recording medium by the scanning exposure, comprising a light source radiating a light beam emitting light over a broad area for at least a sub-scanning direction, a condensing optical system including a first lens which is placed between the light source and the recording medium and makes the light beam radiated from the light source a substantial parallel light flux and a second lens which is placed between the first lens and the recording medium and condenses the light beam onto the recording medium, and an array refracting element in which refracting members having a unit surface shape that divides one light beam into two beams are arranged so as to be in the shape of an array in pair units and which is placed between the light source and the first lens so that a division direction of the light beam is substantially parallel to a broad area direction of the light beam radiated from the light source, wherein a distance S between the light source and the array refracting element, a wavelength $\lambda$ of the light beam, and a width d for the division direction of the divided region of the light beam in the refracting member are determined so that a value $(R \times \lambda)/d$ obtained by dividing a product value $S \times \lambda$ of the distance S and the wavelength $\lambda$ by the width d is not more than the predetermined value.

That is to say, the exposure apparatus of the third aspect has the almost same construction as the exposure apparatus of the first aspect, and differs therefrom only in that the array refracting element is arranged between the light source and the first lens.

In this case, though the diffraction angle p1 of the primary diffraction light is the same as the equation (3), the shift between the central position of the condensing spot and the central position of the primary diffraction light is expressed by the following equation (6).

$$p1 \times S = \frac{S \times \lambda}{d} \tag{6}$$

In order to reduce the shift between the condensing spot and the primary diffraction light, the distance S, the wavelength $\lambda$, and the width d may be determined so that a value represented by a right-hand side of the equation (6) is reduced. In the exposure apparatus of the third aspect, the distance S, the wavelength $\lambda$, and the width d are determined so that the value $(S \times \lambda)/d$ obtained by dividing the product value $S \times \lambda$ of the distance S and the wavelength $\lambda$ by the width d is not more than the predetermined value.

The light source of the invention includes various kinds of semiconductor lasers. The first lens of the invention includes various kinds of collimator lenses and the second lens of the invention includes various kinds of condenser lenses respectively.

As described above, according to the exposure apparatus of the third aspect, the exposure apparatus comprises the light source radiating the light beam emitting light in the broad area for at least the sub-scanning direction, the condensing optical system including the first lens which is placed between the light source and the recording medium and makes the light beam radiated from the light source a substantial parallel light flux and the second lens which is placed between the first lens and the recording medium and condenses the light beam onto the recording medium, and the array refracting element in which the refracting members having the unit surface shape that divides one light beam into two beams are arranged so as to be in the shape of the array in pair units and which is placed between the light source and the first lens so that the division direction of the light beam is substantially parallel to the broad area direction of the light beam radiated from the light source, and, in the apparatus, the distance S between the light source and the array refracting element, the wavelength $\lambda$ of the light beam, and the width d for the division direction of the divided region of the light beam in the refracting member are determined so that the value $(S \times \lambda)/d$ obtained by dividing the product value $S \times \lambda$ of the distance S and the wavelength $\lambda$ by the width d is not more than the predetermined value. Thus, the shift between the condensing spot and the primary diffraction light to be reduced, and consequently, the quality of the image formed on the recording medium can be improved.

It has been found by experiments by the inventor of the invention that, when the shift between the condensing spot and the primary diffraction light exceeds the half width at half maximum at the radiating position of the light beam, the influence of the shift on the condensing spot of the primary diffraction light is enlarged and the shift also causes a problem in the image quality.

It is preferred that the above-described predetermined value in the third aspect be the half width at half maximum at the radiating position of the light beam.

As a result, deterioration of the image quality by the influence of the primary diffraction light can be securely prevented.

The influence of the shift between the condensing spot and the primary diffraction light on the image quality depends on the resolution of the image formed on the recording medium and the like to a certain extent and the required image quality is not always constant, so that the above-described predetermined value is not limited to the half width at half maximum and the predetermined value can also be a value near the half width at half maximum (for example, a ±10% value of the half width at half maximum).

Preferably, the exposure apparatus of any one of the first to third aspects further comprise an input component which inputs resolution information showing the resolution of an image formed on the recording medium by the scanning exposure and a moving component which moves the array refracting element such that the array refracting element is retracted from the optical axis of the light beam radiated from the light source in the case where the resolution indicated by the resolution information is a predetermined first resolution and the array refracting element is positioned on the optical axis in the case where the resolution indicated by the resolution information is a second resolution, which is lower than the first resolution.

As a result, the resolution information indicating the resolution of the image formed on the recording medium by the scanning exposure is inputted by the input component, the array refracting element is moved by the moving component such that the array refracting element is retracted from the optical axis of the light beam radiated from the light source in the case where the resolution indicated by the resolution information is the predetermined first resolution and the array refracting element is positioned on the optical axis in the case where the resolution indicated by the resolution information is the second resolution, which is lower than the first resolution.

As described above, the resolution information indicating the resolution of the image formed on the recording medium by the scanning exposure is inputted, and the array refracting element is moved by the moving component such that the array refracting element is retracted from the optical axis of the light beam radiated from the light source in the case where the resolution indicated by the resolution information is the predetermined first resolution and the array refracting element is positioned on the optical axis in the case where the resolution indicated by the resolution information is the second resolution, which is lower than the first resolution. Thus, the resolutions in recording the image on the recording medium can be easily changed only by inputting the resolution information.

Furthermore, in the case where the exposure apparatus of any one of the first to third aspects is formed so that the plurality of light sources are arranged along the division direction of the light beam and the light beams radiated from each light source are divided by the array refracting element respectively to be guided to the recording medium, not only the improvement of the image quality of the recording image but also the high speed recording of the image can be performed.

In order to achieve the above-described object, according to a fourth aspect of the invention, there is provided an exposure apparatus which forms an image on a recording medium by scanning exposure, comprising a light source radiating a light beam emitting light over a broad area for at least a sub-scanning direction, a condensing optical system including a first lens which is placed between the light source and the recording medium and makes the light beam radiated from the light source a substantial parallel light flux and a second lens which is placed between the first lens and the recording medium and condenses the light beam onto the recording medium, a polarization separating element which is placed between the first lens and the second lens and separates the light beam into two light beams whose polarization directions are orthogonal to each other, and a polarization direction control element which is placed between the first lens and the polarization separating element and in which a plurality of half-wave plates are placed at one period of each predetermined interval c in an entire incident region of the light beam so that a crystal optical axis is slanted at an angle within a predetermined region including 45° relative to the polarization direction of the light beam separated by the polarization separating element, wherein a focal distance f of the second lens, a wavelength λ of the light beam, and the predetermined interval c are determined so that a value (f×λ)/c obtained by dividing a product value f×λ of the focal distance f and the wavelength λ by the predetermined interval c is not more than a predetermined value.

According to the exposure apparatus of the fourth aspect, for at least the sub-scanning direction, after the light beam radiated from the light source radiating a light beam emitting light over a broad area is made the substantial parallel light flux by the first lens of the condensing optical system, when the light beam is condensed on the recording medium by the second lens, the light beam is separated into two light beams whose polarization directions are orthogonal to each other by the polarization separating element. The light source of the invention includes various kinds of semiconductor lasers, the first lens of the invention includes various kinds of collimator lenses, and the second lens of the invention includes various kinds of condenser lenses respectively. The polarization separating element includes various kinds of prisms such as Rochon Prism and Wollaston Prism.

In the fourth aspect of the invention, the polarization direction control element in which the plurality of half-wave plates are placed at one period of each predetermined interval c in the entire incident region of the light beam so that the crystal optical axis is slanted at an angle within the predetermined region including 45° relative to the polarization direction of the light beam separated by the polarization separating element, is placed between the first lens and the polarization separating element.

According to the above-described construction, in the exposure apparatus of the fourth aspect, it is possible that the light can be separated in an equal quantity of light by the polarization separating element, and the quality of the image can be improved by the separated light when the image is recorded on the recording medium.

In case of the exposure apparatus constructed in the above-described way, since the width d of the periodic aperture grid shown in Fig. 29 corresponds to the predetermined interval c of the invention, the diffraction angle p1 of the primary diffraction light generated in the polarization direction control element is expressed by the following equation (7) derived from the equation (2).

$$p1 = \frac{1 \cdot \lambda}{c} = \frac{\lambda}{c} \qquad\qquad (7)$$

Accordingly, the shift between the central position of the condensing spot and the central position of the primary diffraction light is expressed by the following equation (8).

$$p1 \times f = \frac{f \times \lambda}{c} \qquad\qquad (8)$$

In order to reduce the shift between the condensing spot and the primary diffraction light, the focal distance f, the wavelength $\lambda$, and the predetermined interval c may be determined so that a value represented by a right-hand side of the equation (8) is reduced. In the exposure apparatus of the fourth aspect, the focal distance f, the wavelength $\lambda$, and the predetermined interval c are determined so that the value $(f \times \lambda)/c$ obtained by dividing the product value $f \times \lambda$ of the focal distance f and the wavelength $\lambda$ by the predetermined interval c is not more than the predetermined value.

As described above, according to the exposure apparatus of the fourth aspect, the exposure apparatus comprises the light source radiating the light beam emitting light in the broad area for at least the sub-scanning direction, the condensing optical system including the first lens which is placed between the light source and the recording medium and makes the light beam radiated from the light source a substantial parallel light flux and the second lens which is placed between the first lens and the recording medium and condenses the light beam onto the recording medium, the polarization separating element separating the light beam into two light beams whose polarization directions are orthogonal to each other, and the polarization direction control element in which the plurality of half-wave plates are placed at one period of each predetermined interval c in the entire incident region of the light beam so that the crystal optical axis is slanted at an angle within the predetermined region including 45° relative to the polarization direction of the light beam separated by the polarization separating element, and, in the apparatus, the focal distance f of the second lens, the wavelength $\lambda$ of the light beam, and the predetermined interval c are determined so that the value $(f \times \lambda)/c$ obtained by dividing the product value $f \times \lambda$ of the focal distance f and the wavelength $\lambda$ by the predetermined interval c is not more than the predetermined value. Thus, the shift between the condensing spot of the light beam and the primary diffraction light can be reduced, and consequently, the quality of the image formed on the recording medium can be improved.

In order to achieve the above-described object, according to a fifth aspect of the invention., there is provided an exposure apparatus which forms an image on a recording medium by scanning exposure, comprising a light source radiating a light beam emitting light over a broad area for at least a sub-scanning direction, a condensing optical system including a first lens which is placed between the light source and the recording medium and makes the light beam radiated from the light source a substantial parallel light flux and a second lens which is placed between the first lens and the recording medium and condenses the light beam onto the recording medium, a polarization separating element which is placed between the second lens and the recording medium and separates the light beam into two light beams whose polarization directions are orthogonal to each other, and a polarization direction control element which is placed between the second lens and the polarization separating element and in which a plurality of half-wave plates are placed at one period of each predetermined interval c in an entire incident region of the light beam so that a crystal optical axis is slanted at an angle within a predetermined region including 45° relative to the polarization direction of the light beam separated by the polarization separating element, wherein a distance Q between the polarization direction control element and the recording medium, a wavelength λ of the light beam, and a predetermined interval c are determined so that a value (Q×λ)/c obtained by dividing a product value Q×λ of the distance Q and the wavelength λ by the predetermined interval c is not more than a predetermined value.

That is to say, the exposure apparatus of the fifth aspect has the almost same construction as the exposure apparatus of the fourth aspect, and differs therefrom only in that the polarization direction control element and the polarization separating element are arranged between the second lens and the recording medium.

In this case, though the diffraction angle p1 of the primary diffraction light is the same as the equation (7) , the shift between the central position of the condensing spot and the central position of the primary diffraction light is expressed by the following equation (9).

$$p1 \times Q = \frac{Q \times \lambda}{c} \tag{9}$$

In order to reduce the shift between the condensing spot and the primary diffraction light, the distance Q, the wavelength λ, and the predetermined interval c may be determined so that a value represented by a right-hand side of the equation (9) is reduced. In the exposure apparatus of the fifth aspect, the distance Q, the wavelength λ, and the predetermined interval c are determined so that the value (Q×λ)/c obtained by dividing the product value Q×λ of the distance Q and the wavelength λ by the predetermined interval c is not more than the predetermined value.

The light source of the invention includes various kinds of semiconductor lasers, the first lens of the invention includes various kinds of collimator lenses, and the second lens of the invention includes various kinds of condenser lenses respectively. The polarization separating element includes various kinds of prisms such as Rochon Prism and Wollaston Prism.

As described above, according to the exposure apparatus of the fifth aspect, the exposure apparatus comprises the light source radiating the light beam emitting light in the broad area for at least the sub-scanning direction, the condensing optical system including the first lens which is placed between the light source and the recording medium and makes the light beam radiated from the light source a substantial parallel light flux and the second lens which is placed between the first lens and the recording medium and condenses the light beam onto the recording medium, the polarization separating element separating the light beam into two light beams whose polarization directions are orthogonal to each other, and the polarization direction control element in which the plurality of half-wave plates are placed at one period of each predetermined interval c in the entire incident region of the light beam so that the crystal optical axis is slanted at the angle within the predetermined region including 45° relative to the polarization direction of the light beam separated by the polarization separating element, and, in the apparatus, the distance Q between the polarization direction control element and the recording medium, a wavelength λ of the light beam, and the predetermined interval c are determined so that the value (Q×λ)/c obtained by dividing the product value Q×λ of the distance Q and the wavelength λ by the predetermined interval c is not more than the predetermined value. Thus, the shift between the condensing spot of the light beam and the primary diffraction light can be reduced, and consequently, the quality of the image formed on the recording medium can be improved.

As described above, since it has found by experiments of the inventor of the invention that, when the shift between the condensing spot and the primary diffraction light exceeds half width at half maximum of the condensing spot, the influence of the shift on the condensing spot of the primary diffraction light is enlarged and the shift also causes the problem in the image quality, it is preferred that the above-described predetermined value in the fourth aspect or the fifth aspect of the invention be the half width at half maximum of the condensing spot of the light beam onto the recording medium.

This allows deterioration of the image quality by the influence of the primary diffraction light to be securely prevented.

Also in this case, the influence of the shift between the condensing spot and the primary diffraction light on the image quality also depends on the resolution of the image formed on the recording medium and the like to a certain extent and the required image quality is not always constant, so that the above-described predetermined value is not limited to the half width at half maximum and can also be a value near the half width at half maximum (for example, a ±10% value of the half width at half maximum).

In order to achieve the above-described object, according to a sixth aspect of the invention, there is provided an exposure apparatus which forms an image on a recording medium by scanning exposure comprising, a light source radiating a light beam emitting light over a broad area for at least a sub-scanning direction, a condensing optical system including a first lens which is placed between the light source and the recording medium and makes the light beam radiated from the light source a substantial parallel light flux and a second lens which is placed between the first lens and the recording medium and condenses the light beam onto the recording medium, a polarization separating element which is placed between the light source and the first lens and separates the light beam into two light beams whose polarization directions are orthogonal to each other, and a polarization direction control element which is placed between the light source and the polarization separating element and in which a plurality of half-wave plates are placed at one period of each predetermined interval c in an entire incident region of the light beam so that a crystal optical axis is slanted at an angle within a predetermined region including 45° relative to the polarization direction of the light beam separated by the polarization separating element, wherein a distance T between the light source and the polarization direction control element, a wavelength $\lambda$ of the light beam, and a predetermined interval c are determined so that a value $(T\times\lambda)/c$ obtained by dividing a product value $T\times\lambda$ of the distance T and the wavelength $\lambda$ by the predetermined interval c is not more than a predetermined value.

That is to say, the exposure apparatus of the sixth aspect has the almost same construction as the exposure apparatus of the fourth aspect, and differs therefrom only in that the polarization direction control element and the polarization separating element are arranged between the light source and the first lens.

In this case, though the diffraction angle p1 of the primary diffraction light is the same as the equation (7), the shift between the central position of the condensing spot and the central position of the primary diffraction light is expressed by the following equation (10).

$$p1 \times T = \frac{T \times \lambda}{c} \tag{10}$$

In order to reduce the shift between the condensing spot and the primary diffraction light, the distance T, the wavelength $\lambda$, and the predetermined interval c may be determined so that a value represented by a right-hand side of the equation (10) is reduced. In the exposure apparatus of the sixth aspect, the distance T, the wavelength $\lambda$, and the predetermined interval c are determined so that the value $(T\times\lambda)/c$ obtained by dividing the product value $T\times\lambda$ of the distance T and the wavelength $\lambda$ by the predetermined interval c is not more than the predetermined value.

The light source of the invention includes various kinds of semiconductor lasers, the first lens of the invention includes various kinds of collimator lenses, and the second lens of the invention includes various kinds of condenser lenses respectively. The polarization separating element includes various kinds of prisms such as Rochon Prism and Wollaston Prism.

As described above, according to the exposure apparatus of the sixth aspect, the exposure apparatus comprises the light source radiating the light beam emitting light in the broad area for at least the sub-scanning direction, the condensing optical system including the first lens which is placed between the light source and the recording medium and makes the light beam radiated from the light source a substantial parallel light flux and the second lens which is placed between the first lens and the recording medium and condenses the light beam onto the recording medium, the polarization separating element separating the light beam into two light beams whose polarization directions are orthogonal to each other, and the polarization direction control element in which the plurality of half-wave plates are placed at one period of each predetermined interval c in the entire incident region of the light beam so that the crystal optical axis is slanted at an angle within the predetermined region including 45° relative to the polarization direction of the light beam separated by the polarization separating element, and, in the apparatus, the distance T between the light source and the polarization direction control element, a wavelength $\lambda$ of the light beam, and the predetermined interval c are determined so that the value $(T\times\lambda)/c$ obtained by dividing the product value $T\times\lambda$ of the distance T and the wavelength $\lambda$ by the predetermined interval c is not more than the predetermined value. Thus, the shift between the condensing spot of the light beam and the primary diffraction light can be reduced, and consequently, the quality of the image formed on the recording medium can be improved.

As described above, since it is found by experiments of the inventor of the invention that, when the shift between the condensing spot and the primary diffraction light exceeds half width at half maximum at the radiating position of the light beam, the influence of the shift on the condensing spot of the primary diffraction light is enlarged and the shift also causes the problem in the image quality, it is preferred that the above-described predetermined value in the sixth aspect of the invention is the half width at half maximum at the radiating position of the light beam.

This allows deterioration of the image quality by the influence of the primary diffraction light to be securely prevented.

Also in this case, the influence of the shift between the condensing spot and the primary diffraction light on the image quality also depends on the resolution of the image formed on the recording medium and the like to a certain extent and the required image quality is not always constant, so that the above-described predetermined value is not limited to the half width at half maximum and can also be a value near the half width at half maximum (for example, a $\pm10\%$ value of the half width at half maximum).

Preferably, the exposure apparatus of any one of the fourth to sixth aspects further comprise an input component which inputs resolution information showing the resolution of the image formed on the recording medium by the scanning exposure and a moving component which moves the polarization separating element such that the polarization separating element is retracted from the optical axis of the light beam radiated from the light source in the case where the resolution indicated by the resolution information is a predetermined first resolution and the polarization separating element is positioned on the optical axis in the case where the resolution indicated by the resolution information is a second resolution, which is lower than the first resolution.

As a result, the resolution information indicating the resolution of the image formed on the recording medium by the scanning exposure is inputted by the input component, the polarization separating element is moved by the moving component such that the polarization separating element is retracted from the optical axis of the light beam radiated from the light source in the case where the resolution indicated by the resolution information is the predetermined first resolution and the polarization separating element is positioned on the optical axis in the case where the resolution indicated by the resolution information is the second resolution, which is lower than the first resolution.

As described above, the resolution information indicating the resolution of the image formed on the recording medium by the scanning exposure is inputted, and the polarization separating element is moved by the moving component such that the polarization separating element is retracted from the optical axis of the light beam radiated from the light source in the case where the resolution indicated by the resolution information is the predetermined first resolution and the polarization separating element is positioned on the optical axis in the case where the resolution indicated by the resolution information is the second resolution, which is lower than the first resolution, so that the resolutions in recording the image on the recording medium can be easily changed only by inputting the resolution information.

Furthermore, in the case where the exposure apparatus of any one of the fourth to sixth aspects are formed such that the plurality of light sources are arranged along the separated direction of the light beam and the light beams radiated from each light source are separated by the polarization separating element respectively to be guided to the recording medium, not only the improvement of the image quality of the recording image but also the high speed recording of the image can be performed.

As described in detail above, the exposure apparatus of the first aspect comprises the light source radiating the light beam emitting light in the broad area for at least the sub-scanning direction, the condensing optical system including the first lens which is placed between the light source and the recording medium and makes the light beam radiated from the light source a substantial parallel light flux and the second lens which is placed between the first lens and the recording medium and condenses the light beam onto the recording medium, and the array refracting element in which the refracting members having the unit surface shape that divides one light beam into two beams are arranged so as to be in the shape of the array in pair units and which is placed between the first lens and the second lens so that the division direction of the light beam is substantially parallel to the broad area direction of the light beam radiated from the light source, and, in the apparatus, the focal distance f of the second lens, the wavelength $\lambda$ of the light beam, and the width d for the division direction of the divided region of the light beam in the refracting member are determined so that the value $(f\times\lambda)/d$ obtained by dividing the product value $f\times\lambda$ of the focal distance f and the wavelength $\lambda$ by the width d is not more than the predetermined value. Thus, there is obtained an effect that the shift between the condensing spot and the primary diffraction light can be reduced, and consequently, the quality of the image formed on the recording medium can be improved.

The exposure apparatus of the second aspect comprises the light source radiating the light beam emitting light in the broad area for at least the sub-scanning direction, the condensing optical system including the first lens which is placed between the light source and the recording medium and makes the light beam radiated from the light source a substantial parallel light flux and the second lens which is placed between the first lens and the recording medium and condenses the light beam onto the recording medium, and the array refracting element in which the refracting members having the unit surface shape that divides one light beam into two beams are arranged so as to be in the shape of the array in pair units and which is placed between the second lens and the recording medium so that the division direction of the light beam is substantially parallel to the broad area direction of the light beam radiated from the light source, and, in the apparatus, the distance R between the array refracting element and the recording medium, the wavelength $\lambda$ of the light beam, and the width d for the division direction of the divided region of the light beam in the refracting member are determined so that the value $(R\times\lambda)/d$ obtained by dividing the product value $R\times\lambda$ of the distance R and the wavelength $\lambda$ by the width d is not more than the predetermined value. Thus, there is obtained an effect that the shift between the condensing spot and the primary diffraction light can be reduced, and consequently, the quality of the image formed on the recording medium can be improved.

The exposure apparatus of the third aspect comprises the light source radiating the light beam emitting light in the broad area for at least the sub-scanning direction, the condensing optical system including the first lens which is placed between the light source and the recording medium and makes the light beam radiated from the light source a substantial parallel light flux and the second lens which is placed between the first lens and the recording medium and condenses the light beam onto the recording medium, and the array refracting element in which the refracting members having the unit surface shape that divides one light beam into two beams are arranged so as to be in the shape of the array in pair units and which is placed between the light source and the first lens so that the division direction of the light beam is substantially parallel to the broad area direction of the light beam radiated from the light source, and, in the apparatus, the distance S between the light source and the array refracting element, the wavelength λ of the light beam, and the width d for the division direction of the divided region of the light beam in the refracting member are determined so that the value (S×λ)/d obtained by dividing the product value S×λ of the distance S and the wavelength λ by the width d is not more than the predetermined value. Thus, there is obtained an effect that the shift between the condensing spot and the primary diffraction light can be reduced, and consequently, the quality of the image formed on the recording medium can be improved.

The exposure apparatus of the fourth aspect comprises the light source radiating the light beam emitting light in the broad area for at least the sub-scanning direction, the condensing optical system including the first lens which is placed between the light source and the recording medium and makes the light beam radiated from the light source a substantial parallel light flux and the second lens which is placed between the first lens and the recording medium and condenses the light beam onto the recording medium, the polarization separating element separating the light beam into two light beams whose polarization directions are orthogonal to each other, and the polarization direction control element in which the plurality of half-wave plates are placed at one period of each predetermined interval c in the entire incident region of the light beam so that the crystal optical axis is slanted at an angle within the predetermined region including 45° relative to the polarization direction of the light beam separated by the polarization separating element, and, in the apparatus, the focal distance f of the second lens, the wavelength λ of the light beam, and the predetermined interval c are determined so that the value (f× λ)/c obtained by dividing the product value f×λ of the focal distance f and the wavelength λ by the predetermined interval c is not more than the predetermined value. Thus, there is obtained an effect that the shift between the condensing spot of the light beam and the primary diffraction light can be reduced, and consequently, the quality of the image formed on the recording medium can be improved.

The exposure apparatus of the fifth aspect comprises the light source radiating the light beam emitting light in the broad area for at least the sub-scanning direction, the condensing optical system including the first lens which is placed between the light source and the recording medium and makes the light beam radiated from the light source a substantial parallel light flux and the second lens which is placed between the first lens and the recording medium and condenses the light beam onto the recording medium, the polarization separating element separating the light beam into two light beams whose polarization directions are orthogonal to each other, and the polarization direction control element in which the plurality of half-wave plates are placed at one period of each predetermined interval c in an entire incident region of the light beam so that the crystal optical axis is slanted at an angle within the predetermined region including 45° relative to the polarization direction of the light beam separated by the polarization separating element, and, in the apparatus, the distance Q between the polarization direction control element and the recording medium, a wavelength λ of the light beam, and the predetermined interval c are determined so that the value (Q×λ)/c obtained by dividing the product value Q×λ of the distance Q and the wavelength λ by the predetermined interval c is not more than the predetermined value. Thus, there is obtained an effect that the shift between the condensing spot of the light beam and the primary diffraction light can be reduced, and consequently, the quality of the image formed on the recording medium can be improved.

The exposure apparatus of the sixth aspect comprises the light source radiating the light beam emitting light in the broad area for at least the sub-scanning direction, the condensing optical system including the first lens which is placed between the light source and the recording medium and makes the light beam radiated from the light source a substantial parallel light flux and the second lens which is placed between the first lens and the recording medium and condenses the light beam onto the recording medium, the polarization separating element separating the light beam into two light beams whose polarization directions are orthogonal to each other, and the polarization direction control element in which the plurality of half-wave plates are placed at one period of each predetermined interval c in the entire incident region of the light beam so that the crystal optical axis is slanted at an angle within the predetermined region including 45° relative to the polarization direction of the light beam separated by the polarization separating element, and, in the apparatus, the distance T between the light source and the polarization direction control element, a wavelength λ of the light beam, and the predetermined interval c are determined so that the value (T×λ)/c obtained by dividing the product value T×λ of the distance T and the wavelength λ by the predetermined interval c is not more than the predetermined value. Thus, there is obtained an effect that the shift between the condensing spot of the light beam and the primary diffraction light can be reduced, and consequently, the quality of the image formed on the recording medium can be improved.

BRIEF DESCRIPTION OF THE DRAWINGS

Fig. 1 is a schematic diagram (plan view) of a laser recording apparatus according to a first embodiment of the present invention.

Fig. 2 is a schematic diagram (side view) of a fiber array portion according to embodiments of the present invention.

Fig. 3 is a schematic diagram (plan view) of an array refracting element 36 according to the first embodiment of the present invention.

Fig. 4A is a view showing a state of a condensing spot in a laser recording apparatus according to embodiments and a schematic view showing a state of the condensing spot formed on a recording film F in the case where an array refracting element or a polarization separating element is not positioned on a light path of a laser beam L.

Fig. 4B is a schematic view showing a state of the condensing spot in a laser recording apparatus according to embodiments and a schematic view showing a state of the condensing spot formed on the recording film F in the case where the array refracting element or the polarization separating element is positioned on the light path of the laser beam L.

Fig. 5 is a schematic view (plan view) showing various kinds of parameters of the laser recording apparatus according to the first embodiment.

Fig. 6 is a block diagram showing a construction of a control system of a laser recording apparatus according to embodiments of the present invention.

Fig. 7 is a flow chart showing a processing flow when image recording is carried out corresponding to resolution in the first and a second embodiments of the present invention.

Fig. 8A and Fig. 8B are schematic views showing a state of a beam spot on the recording film F by a laser recording apparatus according to embodiments of the present invention.

Fig. 9A and Fig. 9B are schematic views (plan views) for explaining an effect of the laser recording apparatus according to the first embodiment of the present invention.

Figs. 10A to 10C are schematic diagrams (plan views) showing another construction example of the array refracting element of the present invention.

Figs. 11A and 11B are graphs showing a state example of an intensity distribution of a laser beam in a condensing point.

Fig. 12 is a schematic diagram (plan view) of a laser recording apparatus according to the second embodiment present invention.

Fig. 13A is a schematic view (plan view) for explaining an effect of the laser recording apparatus 10B according to the second embodiment of the present invention.

Fig. 13B is a schematic view (plan view) for explaining a construction and effect of an array refracting element according to the second embodiment of the present invention.

Fig. 14 is a schematic view (plan view) showing various kinds of parameters of the laser recording apparatus according to the second embodiment of the present invention.

Fig. 15 is a schematic view (plan view) showing a construction and various kinds of parameters of another laser recording apparatus.

Fig. 16 is a schematic diagram (plan view) of a laser recording apparatus according to a third embodiment of the present invention.

Fig. 17 is a schematic view (plan view) for explaining a construction and effect of a polarization separating element according to the third embodiment of the present invention.

Fig. 18A is a schematic diagram (front view and side view) of a polarization direction control element according to the third and a fourth embodiments of the present invention.

Fig. 18B is a schematic view showing a direction of a crystal optical axis of the polarization direction control element.

Figs. 19A and 19B are schematic views showing a separating state of the laser beam by the polarization separating element in the case where the polarization direction control element is not utilized in the laser recording apparatus according to the third and fourth embodiments of the present invention.

Figs. 20A and 20B are schematic views showing the separating state of the laser beam by the polarization separating element in the case where the polarization direction control element is utilized in the laser recording apparatus according to the third and fourth embodiments.

Fig. 21 is a flow chart showing the processing flow when the image recording is carried out corresponding to the resolution in the laser recording apparatus according to the third and the fourth embodiments of the present invention.

Fig. 22 is a schematic diagram (plan view) of a laser recording apparatus according to the fourth embodiment.

Fig. 23 is a schematic view (plan view) for explaining an effect of a polarization separating element according to the fourth embodiment of the present invention.

Fig. 24 is a schematic view (plan view) showing a construction and various kinds of parameters of another laser recording apparatus.

Fig. 25 is a schematic view for explaining a principle of the invention.

Figs. 26A and 26B are schematic views for explaining an effect of the invention.

Fig. 27 is a graph showing half width at half maximum of the condensing spot.

Fig. 28 is a schematic view for explaining a principle of the prior art.

Fig. 29 is a schematic view for explaining a generating mechanism of diffraction light.
Fig. 30 is a graph for explaining the generating mechanism of the diffraction light.

## DETAILED DESCRIPTION OF THE INVENTION

Preferred embodiments of the present invention will be described in detail below referring to the accompanying drawings. The case in which the exposure apparatus of the invention is applied to a laser recording apparatus will be described below.

(First Embodiment)

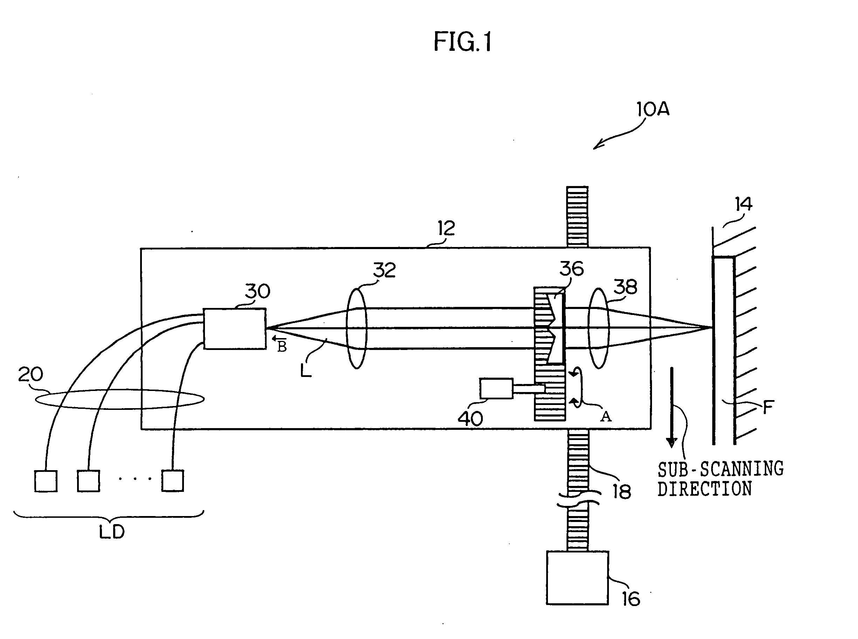

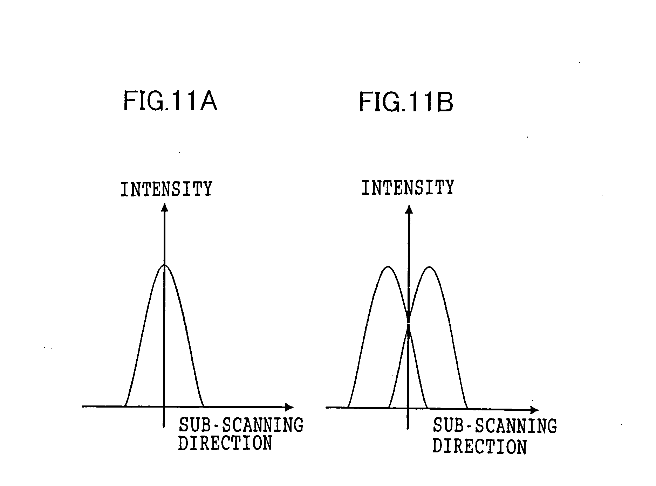

Referring to Fig. 1, a construction of a laser recording apparatus 10A according to a first embodiment will be described. As shown in Fig. 1, the laser recording apparatus 10A according to the first embodiment includes at least three and an odd number of semiconductor lasers LD (fifteen semiconductor lasers in the embodiment), each of which radiates the laser beam, an exposure head 12 condensing each laser beam radiated from each semiconductor laser LD, a drum 14 on which a recording film F on which an image is recorded is mounted and which is rotated so that the recording film F is moved in the main scanning direction, and a sub-scanning motor 16 which moves the exposure head 12 placed on a ball screw 18 in the sub-scanning direction orthogonal to the main scanning direction by rotating and driving the ball screw 18. In the embodiment, an optical-fiber-coupled semiconductor laser having an intensity distribution shown in Fig. 11 is applied as the semiconductor laser LD.

The exposure head 12 is provided with a horizontal multimode fiber array portion 30 which puts together each laser beam wave-guided from the plurality of semiconductor lasers LD to radiate the beam, and laser beams radiated from each semiconductor laser LD are guided to the fiber array portion 30 by each horizontal multimode optical fiber 20. In the embodiment, the multimode optical fiber having a relatively large core diameter is used as the optical fiber 20 in order to obtain high-output laser beams.

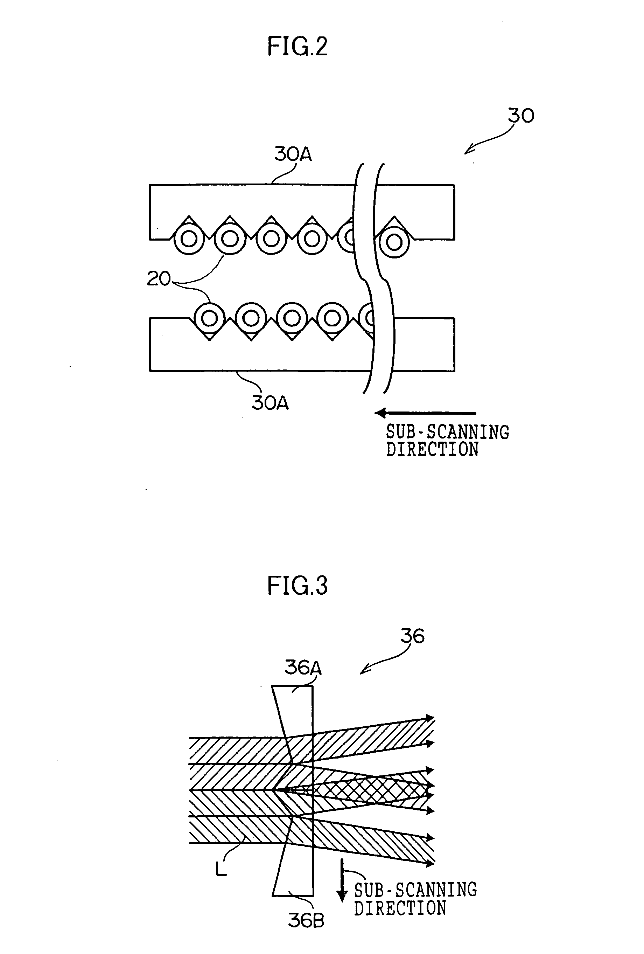

Fig. 2 shows a construction of the fiber array portion 30, viewed from a direction of an arrow B in Fig. 1. As shown in Fig. 2, in the fiber array portion 30 according to the embodiment, opposite surfaces are provided with a pair of bases 30A in which a plurality of V-shaped grooves are provided along the sub-scanning direction so as to be adjacent to each other, and the optical fibers 20 are formed to be fitted one by one into each V-shape groove. Accordingly, a plurality of laser beams L radiated from each semiconductor laser LD are radiated from the fiber array portion 30 in two rows in the main scanning direction at each predetermined interval along the sub-scanning direction.

Each semiconductor laser LD which emits light in the broad band area for one direction may be used as the light source. In this case, the broad band area direction of the laser beam L radiated from each semiconductor laser LD is arranged so as to correspond to the sub-scanning direction.

As shown in Fig. 1, in the exposure head 12, a collimator lens 32 making the laser beam L radiated from the fiber array portion 30 the substantial parallel light flux, an array refracting element 36, and a condenser lens 38 condensing the laser beam L on the recording film F are arranged in order from the fiber array portion 30 side.

Further, the exposure head 12 is provided with an element moving motor 40 which can insert and draw the array refracting element 36 on the light path of the laser beam L by rotating a rotation axis in a direction of an arrow A in Fig. 1.

As shown in Fig. 3, in the array refracting element 36 according to the embodiment, a pair of deviation prisms 36A and 36B in the shape of a concave lens, which are formed in a unit surface shape that divides each incident laser beam L into two beams, and are arranged in a line shape so that the division directions of each laser beam L correspond to each other and the deviation prisms 36A and 36B are along each of division directions, and the deviation prisms 36A and 36B are positioned by the element moving motor 40 so as to be insertable in and drawable from a position where a far field pattern is formed by the collimator lens 32.

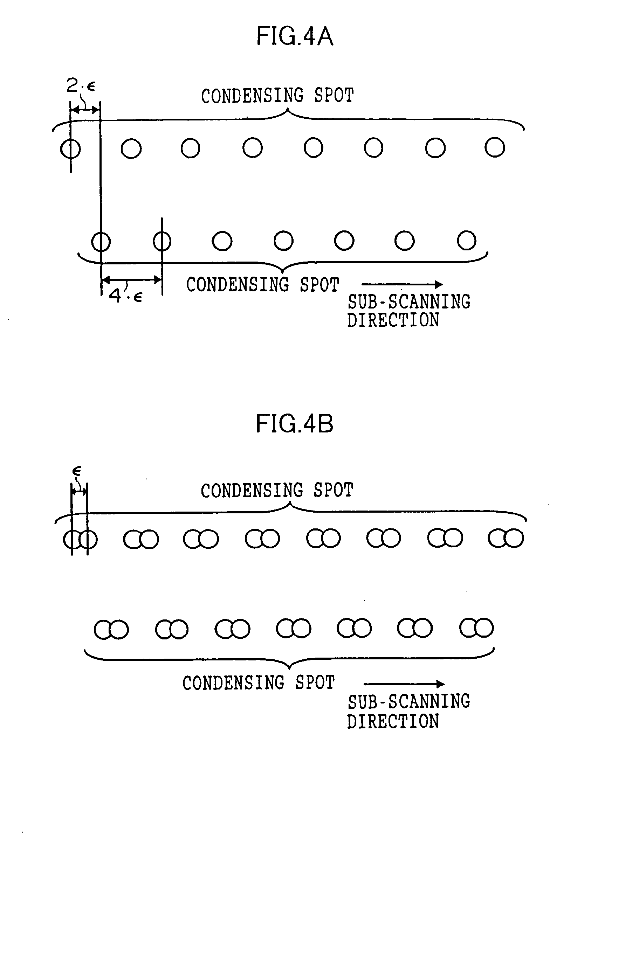

Fig. 4A shows a state of the condensing spot formed on the recording film F in the case where the array refracting element 36 is not positioned on the light path of the laser beam L, and Fig. 4B shows a state of the condensing spot formed on the recording film F in the case where the array refracting element 36 is positioned on the light path of the laser beam L.

As shown in Fig. 4A, in the case where the array refracting element 36 is not positioned on the light path of the laser beam L, the laser beam L radiated from each optical fiber 20 forms the condensing spot on the recording film F without division, on the other hand, in the case where the array refracting element 36 is positioned on the light path of the laser beam L, as shown in Fig. 4B, each laser beam L is divided into two beams along the sub-scanning direction, two condensing spots are formed in each laser beam L on the recording film F.

That is to say, in the laser recording apparatus 10A according to the embodiment, the image recorded on the recording film F, which has a predetermined resolution, and the image having the higher resolution than the predetermined resolution are changed by changing selectively whether the array refracting element 36 is positioned on the light path of the laser beam L or not.

In the embodiment, as shown in Fig. 4A, in the case where the array refracting element 36 is not positioned on the light path of the laser beam L, namely in the case where the image is formed on the high resolution side, an interval between the adjacent condensing spots is set to $4 \cdot \varepsilon$, and the related portions are formed so that the condensing spot of other rows is formed in the central position of the sub-scanning direction between the adjacent condensing spots in the sub-scanning direction. This allows the image having a scanning line pitch interval of $2 \cdot \varepsilon$ to be recorded on the recording film F by one main scanning.

As shown in Fig. 4B, in the embodiment, the related portions are set so that the shift of the condensing spot on the recording film F corresponding to two laser beams divided by the array refracting element 36 is $\varepsilon$.

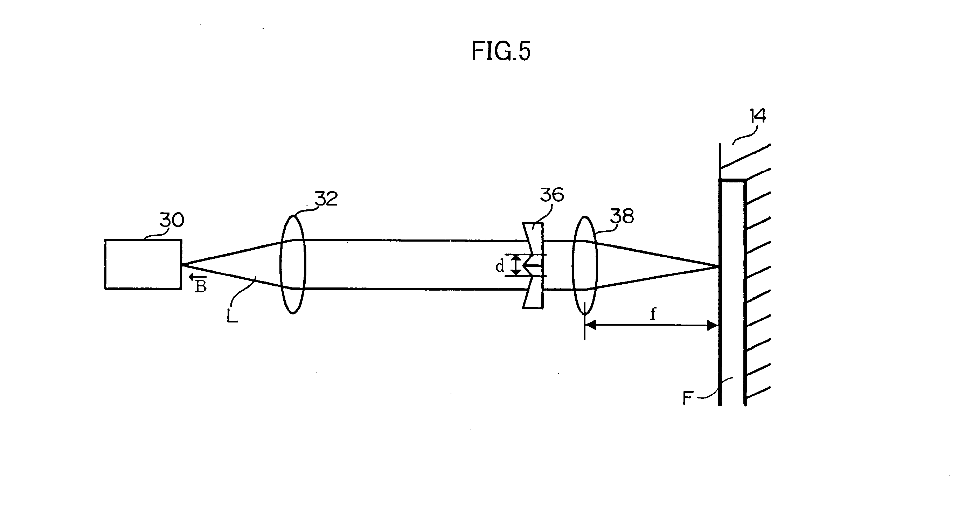

In the laser recording apparatus 10A according to the embodiment, the focal distance f of the condenser lens 38 shown in Fig. 5, the wavelength $\lambda$ of the laser beam L, and the width d for the division direction of the divided region of the laser beam L in the refracting member (deviation prisms 36A and 36B) constituting the array refracting member 36 are determined so that a value $(f \times \lambda)/d$ obtained by dividing the product value $f \times \lambda$ of the focal distance f and the wavelength $\lambda$ by the width d comes to be not more than a predetermined value, which is the half width at half maximum of the light intensity of the condensing spot on the recording film F of the laser beam L in the embodiment (also to Fig. 27).

Though the width d is the width to the division direction of the divided region of the laser beam L in the refracting member constituting the array refracting member, in the case of the array refracting element shown in Fig. 5, only a pair of the refracting members exist and the width d of the refracting member is not clear, so that the width d is determined as the width between concave vertices of each refracting member.

**[0123]** - In the embodiment, the array refracting element 36 is produced in such a manner that the focal distance f of the condenser lens 38 and the wavelength $\lambda$ of the laser beam L are determined beforehand according to design conditions such as manufacturing cost and dimensions of the laser recording apparatus 10A and the width d is determined so that $(f \times \lambda)/d$ is not more than the half width at half maximum of the light intensity of the condensing spot, however, it is not limited to this, for example, it is also possible to make a mode in which the array refracting element 36 is produced by deciding the width d beforehand according to manufacturing conditions such as the manufacturing cost and at least one of the wavelength $\lambda$ of the laser beam L and the focal distance f of the condenser lens 38 is determined so that $(f \times \lambda)/d$ is not more than the half width at half maximum.

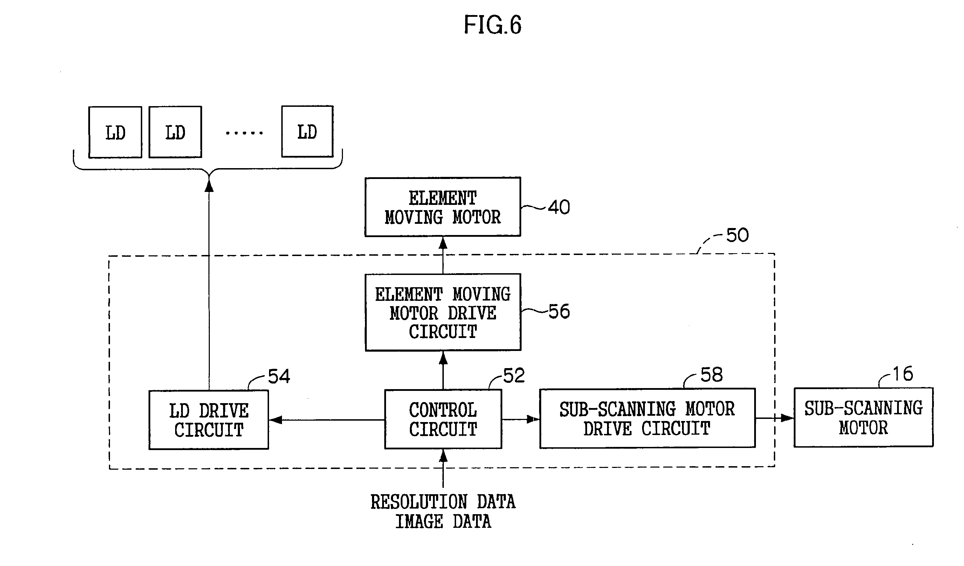

Referring to Fig. 6, a construction of a control system of the laser recording apparatus 10A according to the embodiment will be described below. As shown in Fig. 6, the control system includes a LD drive circuit 54 driving the semiconductor laser LD according to image data, an element moving motor drive circuit 56 driving an element moving motor 40, a sub-scanning motor drive circuit 58 driving the sub-scanning motor 16, and a control circuit 52 controlling the LD drive circuit 54, the element moving motor drive circuit 56, and the sub-scanning motor drive circuit 58. The image data showing the image recorded in the recording film F and resolution data showing the resolution of the recording image are supplied to the control circuit 52.

The array refracting element 36 corresponds to the array refracting element of the invention, the semiconductor laser LD corresponds to the light source of the invention, the collimator lens 32 corresponds to the first lens of the invention, the condenser lens 38 corresponds to the second lens of the invention, the element moving motor 40 corresponds to the moving component of the invention, and the recording film F corresponds to the recording medium of the invention, respectively.

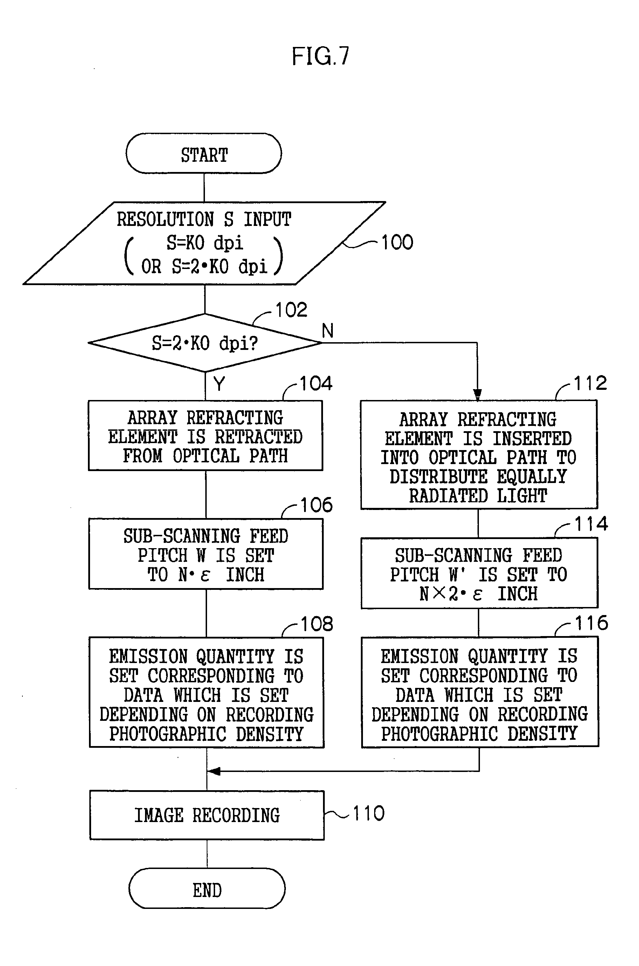

The function of the laser recording apparatus 10A constructed as above will be described below referring to a flow chart shown in Fig. 7.

At first, an operator inputs the resolution data showing a resolution S of the image to be recorded to the laser recording apparatus 10A (Step 100). The resolution data and the image data of the image to be recorded are supplied to the control data 52, the control circuit 52 supplies a signal adjusted on the basis of the data to the LD drive circuit 54, the element moving motor drive circuit 56, and the sub-scanning motor drive circuit 58. In the embodiment, the following explanation will be described on the assumption that the image can be recorded with two kinds of resolutions of K0 (dpi) and $2 \cdot$K0 (dpi) as the resolution S.

In the case where the resolution inputted by the operator is $2 \cdot$K0 (dpi), namely in the case where an affirmative judgment is made in Step 102, the element moving motor drive circuit 56 drives the element moving motor 40 to move the array refracting element 36 so that the array refracting element 36 is not positioned on the light path of the laser beam L (Step 104). In this case, the sub-scanning motor drive circuit 58 sets a feed pitch W of the exposure head 12 in the sub-scanning direction by the sub-scanning motor 16 as follows (Step 106).

$$W = \frac{(N-1) \times 2 \cdot \varepsilon}{2} + \varepsilon = N \cdot \varepsilon \qquad (11)$$

Provided that N is the number of semiconductor lasers LD (there are fifteen in the embodiment).

That is to say, in the case where the resolution is $2 \cdot$K0 (dpi) , the array refracting element 36 is removed from the light path of the laser beam L so that the laser beam L is not divided in the sub-scanning direction, which allows the double resolution to be realized as compared with the division of the laser beam L.

As described above, when the setting of the movement of the array refracting element 36 and the feed pitch in the sub-scanning direction is finished, the LD drive circuit 54 controls drive of each semiconductor laser LD on the basis of the image data so that each semiconductor laser LD emits light in a quantity corresponding to data depending on recording photographic density (Step 108).

The laser beam L radiated from each semiconductor laser LD is formed in the substantial parallel light flux by the collimator lens 32 and then condensed in the recording film F on the drum 14 through the condenser lens 38.

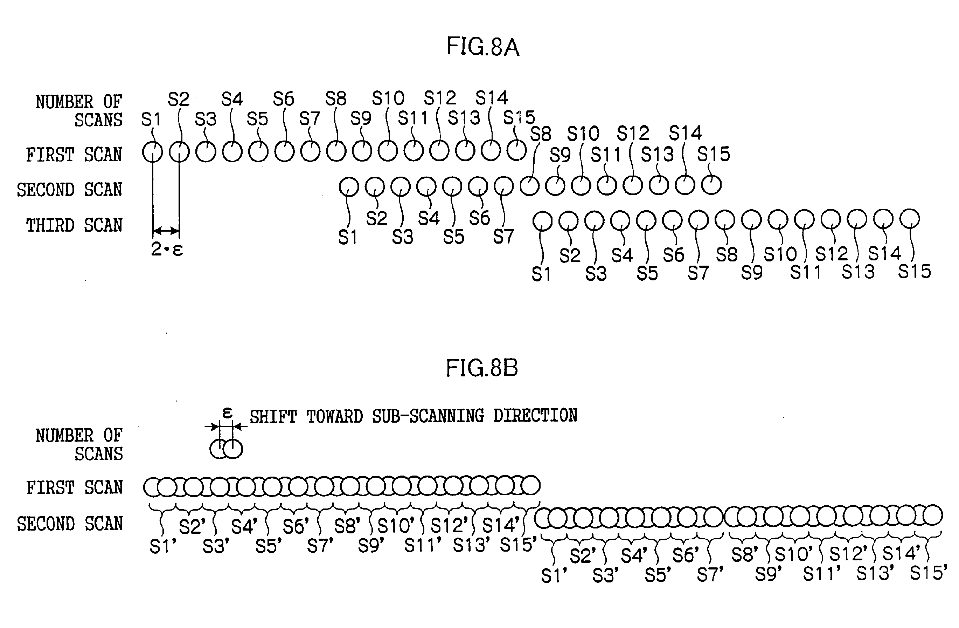

In this case, beam spots S1 to S15 (Fig. 8A) having the intensity distribution shown in Fig. 11A are formed on the recording film F. In the beam spots S1 to S15, as shown in Fig. 8A, the exposure head 12 is fed with the feed pitch W in the sub-scanning direction, and the drum 14 is rotated in the main scanning direction so that a two-dimensional image having the resolution of $2 \cdot K0$ (dpi) is formed on the recording film F (Step 110).

The case where the resolution is changed from $2 \cdot K0$ (dpi) to K0 (dpi), namely the case where a negative judgment is made in Step 102 will be described below. In this case, the element moving motor drive circuit 56 drives the element moving motor 40 to move the array refracting element 36 so that the array refracting element 36 is positioned on the light path of the laser beam L (Step 112). And the sub-scanning motor drive circuit 58 sets a feed pitch W' of the exposure head 12 in the sub-scanning direction by the sub-scanning motor 16 as follows (Step 114).

$$W' = N \times 2^{\cdot} \varepsilon \qquad (12)$$

That is to say, in the case where the resolution is K0 (dpi), the array refracting element 36 is positioned on the light path of the laser beam L so that the laser beam L incident to the array refracting element 36 is divided into the plurality of laser beams (there are two in the embodiment) in the sub-scanning direction, which allows the half resolution to be realized as compared with the case where the laser beam L is not divided.

As described above, when the setting of the movement of the array refracting element 36 and the feed pitch in the sub-scanning direction is finished, the LD drive circuit 54 controls drive of each semiconductor laser LD on the basis of the image data so that each semiconductor laser LD emits light in a quantity corresponding to data depending on recording photographic density (Step 116).

After the laser beam L radiated from each semiconductor laser LD is formed in the substantial parallel light flux by the collimator lens 32, the laser beam L is supplied to the array refracting element 36 and divided into four beams (beam sharing) in each laser beam L in the sub-scanning direction. The quarter laser beams are condensed in the recording film F of the drum 14 through the condenser lens 38 while each laser beam is divided into two beams.

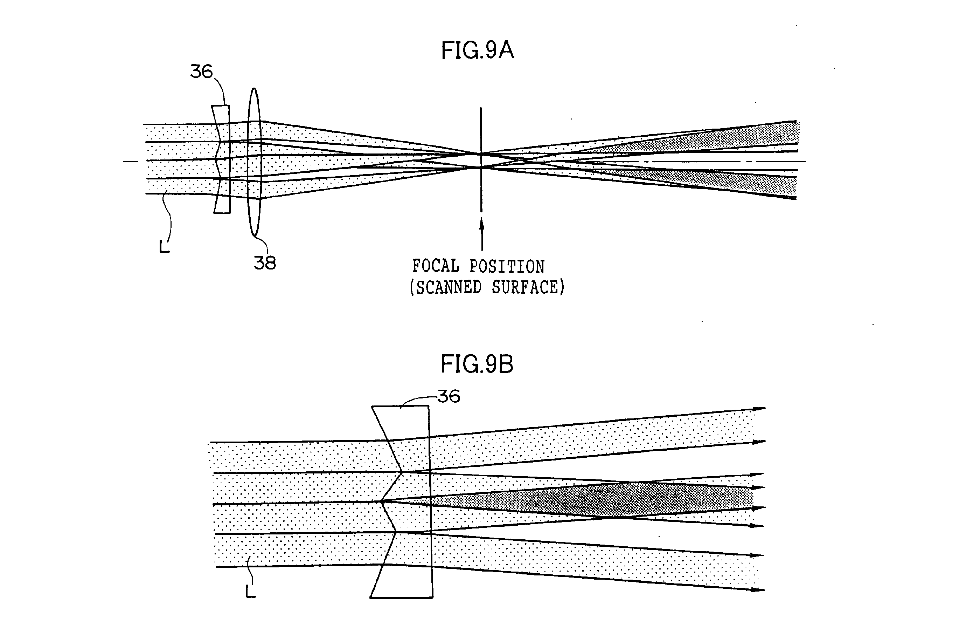

That is to say, as shown in Fig. 9A, when the array refracting element 36 is arranged in the vicinity of a position where the laser beam L on the light path of each laser beam L is formed in the substantial parallel light flux and where the far field pattern is formed, as shown in Fig. 9B, each laser beam L is divided transiently into four beams by the array refracting element 36, and, as shown in Fig. 9A, each laser beam L divided into four beams by the array refracting element 36 is condensed by the condenser lens 36 so that each two of laser beams are superimposed on a scanned surface in the sub-scanning direction, and, as a result, the laser beam L is divided into two beams.

Since one condensing spot is formed by the condensing beams of the number of array pairs, the state of fuzziness of each light beam becomes symmetry relative to the optical axis direction when the incident side of the light beam is viewed from the focal position and when the outgoing side of the light beam is viewed from the focal position, consequently, the image quality of the recording image can be improved in the laser recording apparatus 10A.

In this case, the beam spots S1' to S15' including two intensity distributions shown in Fig. 11B, namely the intensity distributions in which each intensity distribution of the laser beam divided into two beams is synthesized in the sub-scanning direction, are formed on the recording film F (Fig. 8B).

As shown in Fig. 8B, the drum 14 is rotated in the main scanning direction while the exposure head 12 is fed with the feed pitch W' in the sub-scanning direction so that the two dimensional image having the resolution of K0 (dpi) is formed on the recording film F by the beam spots S1' to S15' (Step 110).

As described above, when the resolution of the recording image is changed from $2 \cdot K0$ (dpi) to K0 (dpi), the beam spots S1 to S15 can be easily enlarged to the beam spots S1' to S15' by only inserting the array refracting element 36 into the light path of the laser beam L, furthermore, since the sub-scanning speed is increased, the image recording can be performed at a high speed.

In the same way, the resolution can be changed from K0 (dpi) to $2 \cdot K0$ (dpi).

The processing of Step 100 corresponds to the input component.

As described above in detail, in the laser recording apparatus 10A according to the first embodiment, since the focal distance f of the condenser lens 38, the wavelength $\lambda$ of the laser beam L, and the width d for the division direction of the divided region of the laser beam L in the refracting member constituting the array refracting member are determined so that the value $(f\times\lambda)/d$ obtained by dividing the product value $f\times\lambda$ of the focal distance f and the wavelength $\lambda$ by the width d is not more than the predetermined value, the shift between the condensing spot of the laser beam L and the primary diffraction light can be decreased, consequently, the quality of the image formed on the recording film F can be improved.

Furthermore, in the laser recording apparatus 10A according to the first embodiment, since the above-described predetermined value is set to the half width at half maximum of the condensing spot on the recording film F of the laser beam L, the deterioration of the image quality by the influence of the primary diffraction light can be securely prevented.

However, the embodiment was described with reference to the case where the construction in which the deviation prisms 36A and 36B in the shape of the concave lens are arranged as the array refracting element 36 is applied, the invention is not limited to the above-described construction, any constructions in which the refracting members having the unit surface shape that divides one light beam into two beams are arranged in the array shape in pair units can be applied.

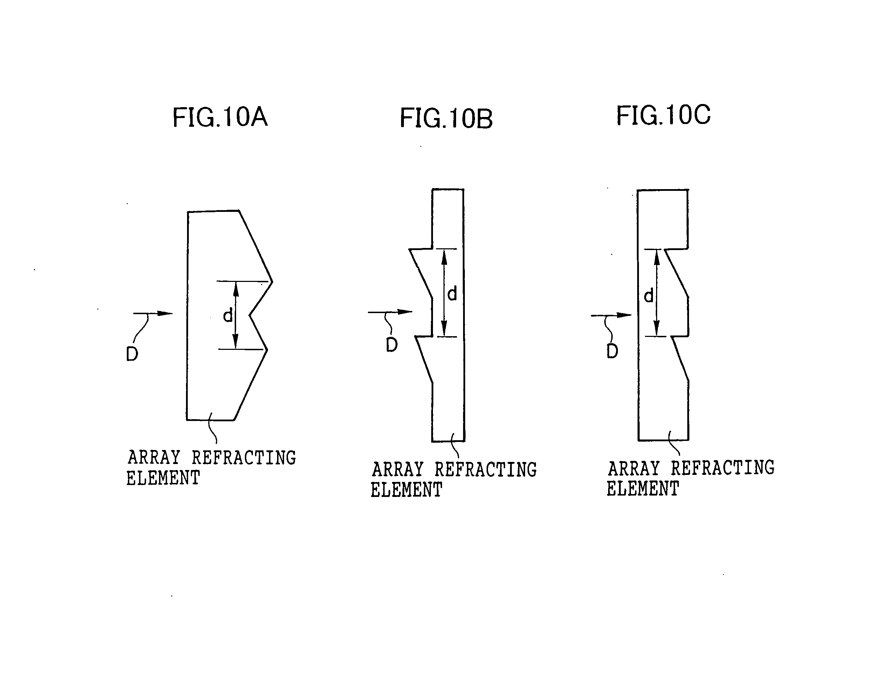

Figs. 10A to 10C show examples of the array refracting elements (plan view) having the shapes except the array refracting element 36 shown in the embodiment. The array refracting element shown in Fig. 10A is configured by forming a pair of unit surface shapes which are convex relative to the outgoing side of the laser beam in a line along the sub-scanning direction. The array refracting element shown in Fig. 10B is configured in such a manner that a pair of unit surface shapes, comprising a combination of a surface formed to be parallel to the optical axis direction of the laser beam relative to the incident side of the laser beam and a surface formed to be slanted relative to the optical axis direction of the laser beam from one end portion of the surface on the incident side of the laser beam, are formed in a line along the sub-scanning direction. The array refracting element shown in Fig. 10C is configured in such a manner that a pair of unit surface shapes, combined by each face of a face formed to be parallel to the optical axis direction of the laser beam relative to the outgoing side of the laser beam and a face formed to be slant relative to the optical axis direction of the laser beam from one end portion on the incident side of the laser beam of the face, are formed in a line along the sub-scanning direction. The unit surface shape is convex relative to the incident side of the laser beam in the array refracting element shown in Fig. 10B, the unit surface shape is concave relative to the outgoing side of the laser beam in the array refracting element shown in Fig. 10C.

In the array refracting element shown in Figs. 10A and 10B, the distance between vertices of two convex portions corresponds to the width d of the invention, and in the array refracting element shown in Fig. 10C, the distance between vertices of two concave portions correspond to the width d of the invention, respectively.

Needless to say, the array refracting element formed integrally so as to form the same shape as the array refracting element 36 according to the embodiment can also be applied.

In the case where these array refracting elements are applied, the same effect as the embodiment can be achieved.

Though the embodiment was described with reference to the case where the half width at half maximum of the condensing spot on the recording film F of the laser beam L is applied as the predetermined value, the invention is not limited to this, since the influence of the shift between the condensing spot and the primary diffraction light on the image quality also depends on the resolution of the image formed on the recording film F and the like to a certain extent and the required image quality is not always constant, a value near the half width at half maximum (for example, a $\pm 10\%$ value of the half width at half maximum) can be applied as the predetermined value. In this case, almost the same effect as the embodiment can be achieved.

(Second Embodiment)

In the first embodiment, there was described the mode of the case where the array refracting element of the invention is provided in a part where the light is formed in the substantial parallel light flux and the incident light is divided into lights at different angles each other to be radiated, on the other hand, in a second embodiment, a mode of the case where the array refracting element of the invention is provided in a part where the light is converged and the incident light is divided to be radiated so as to be parallel to each other will be described.

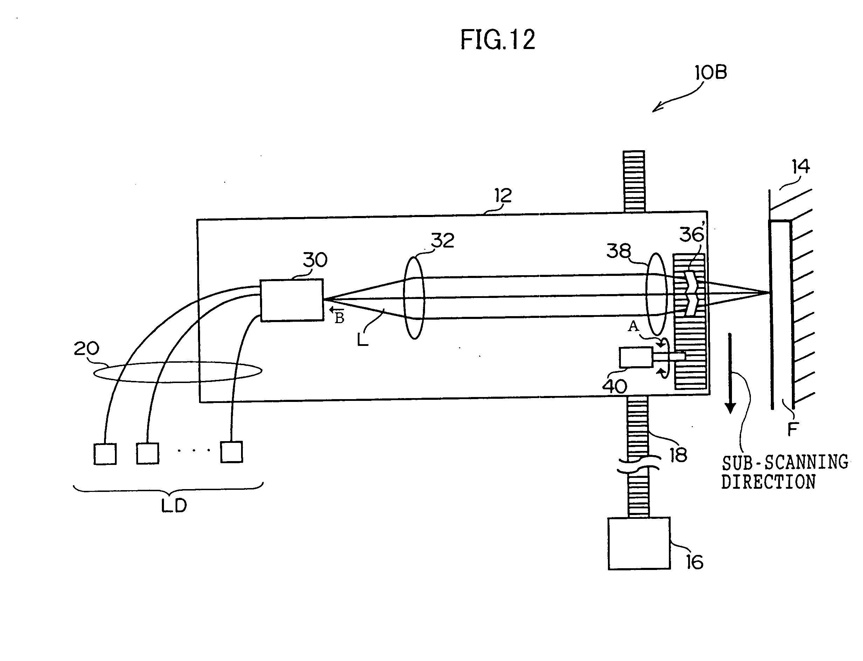

The construction of a laser recording apparatus 10B according to the second embodiment will be described referring to Fig. 12. The same components in Fig. 12 as those of the laser recording apparatus 10A shown in Fig. 1 are indicated by the same reference numerals, and the explanation thereof is omitted.

As shown in Fig. 12, the laser recording apparatus 10B of the second embodiment differs from the laser recording apparatus 10A of the first embodiment only in that the array refracting element 36' is used instead of the array refracting element 36 and the array refracting element 36' is provided between the condenser lens 38 and the recording film F and in a part where the laser beam L is converged.

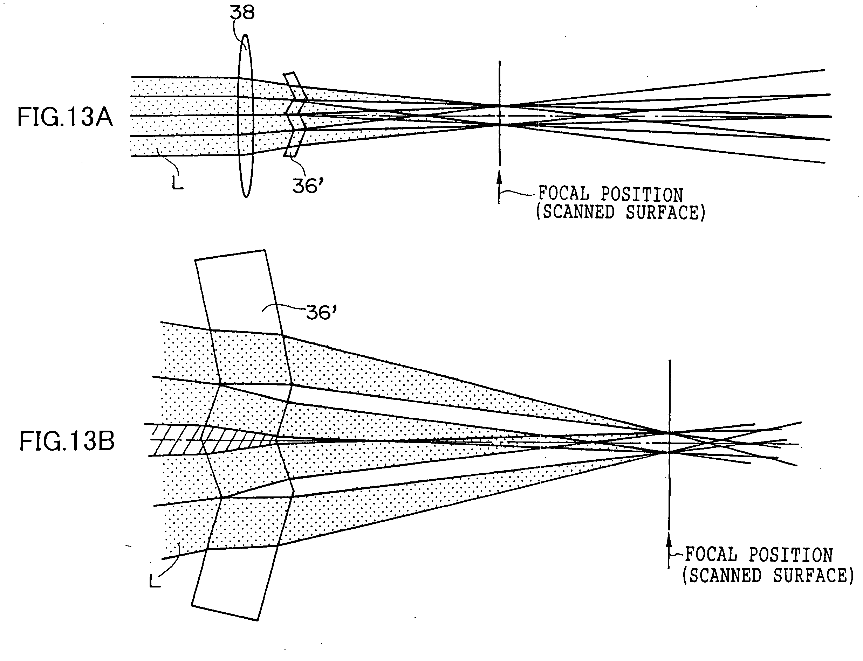

As shown in Fig. 13B, in the array refracting element 36' according to the second embodiment, a pair of refracting members having the unit surface shape, which divide each incident laser beam L into two beams and make the two divided laser beams a substantial parallel to each other to be radiated, are configured to be formed in a line shape so that the division directions of each laser beam L correspond to each other and the refracting member is along the division direction, and the refracting member is positioned by the element moving motor 40 so that the division direction of the laser beam L corresponds to the sub-scanning direction.

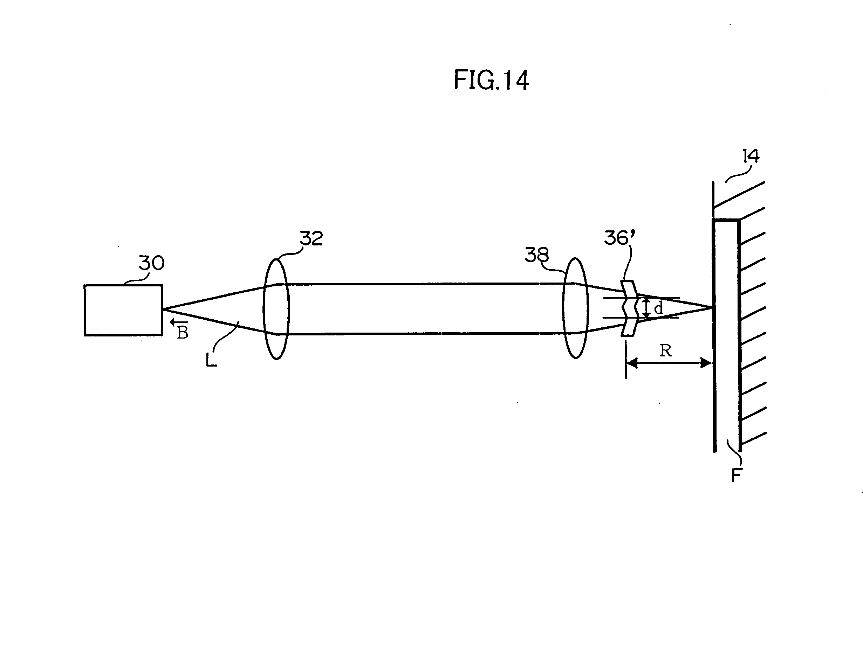

In the laser recording apparatus 10B of the embodiment, the distance R between the array refracting element 36' shown in Fig. 14 and the recording film F, the wavelength $\lambda$ of the laser beam L, and the width d for the division direction of the divided region of the laser beam L in the refracting member constituting the array refracting element 36' are determined so that the value $(R \times \lambda)/d$ obtained by dividing the product value $Rx\lambda$ of the distance R and the wavelength $\lambda$ by the width d is not more than the predetermined value, which is the half width at the half maximum of the light intensity of the condensing spot on the recording film F of the laser beam L in the embodiment (also to Fig. 27).

Though the width d is the width to the division direction of the divided region of the laser beam L in the refracting member constituting the array refracting member, in the case of the array refracting element shown in Fig. 14, only a pair of the refracting members exist and the width d of the refracting member is not clear, so that the width d is determined as the width between concave vertices in the laser beam incident face of each refracting member for convenience.

In the embodiment, the array refracting element 36' is produced in such a manner that the wavelength $\lambda$ and the distance R are determined beforehand according to design conditions such as manufacturing cost and dimensions of the laser recording apparatus 10B and the width d is determined so that $(Rx\lambda)/d$ is not more than the half width at half maximum of the light intensity of the condensing spot, however, it is not limited to this, for example, it is also possible to make a mode in which the array refracting element 36' is produced by deciding the width d beforehand according to manufacturing conditions such as the manufacturing cost and at least one of the wavelength $\lambda$ and the distance R is determined so that $(Rx\lambda)/d$ is not more than the half width at half maximum.

When the resolution is set to K0 (dpi), the laser beam L radiated from each semiconductor laser LD is formed in the substantial parallel light flux by the collimator lens 32, and then, as shown in Fig. 13A, the laser beam L is supplied to the condenser lens 38 to be condensed.

Each laser beam L condensed by the condenser lens 38 is supplied to the array refracting element 36', as shown in Fig. 13B, the laser beam L is divided into four beams (beam sharing) in each laser beam L in the sub-scanning direction, and two divided laser beams are radiated from each pair of parts corresponding to the unit surface shape of the array refracting element 36' so as to be parallel to each other. Each two of the quarter laser beams are superimposed in the sub-scanning direction on the scanned surface of the recording film F provided on the drum 14, and each laser beam is consequently condensed in a state where it is divided into two beams.

In this case, since one condensing spot is formed by the condensing beams of the number of array pairs, the state of fuzziness of each light beam becomes symmetry relative to the optical axis direction when the incident side of the light beam is viewed from the focal position and when the outgoing side of the light beam is viewed from the focal position, consequently, the image quality of the recording image can be improved in the laser recording apparatus 10B.

In this case, the beam spots S1' to S15' including two intensity distributions shown in Fig. 11B, namely the intensity distributions in which each intensity distribution of the laser beam divided into two beams is synthesized in the sub-scanning direction, are formed on the recording film F (Fig. 8B).

As shown in Fig. 8B, the drum 14 is rotated in the main scanning direction while the exposure head 12 is fed with the feed pitch W' in the sub-scanning direction so that the two dimensional image having the resolution of K0 (dpi) is formed on the recording film F by the beam spots S1' to S15'.

On the other hand, when the image having the resolution of $2 \cdot K0$ (dpi) is formed, the array refracting element 36' may be moved so as not to be positioned on the light path of the laser beam L and controlled so that the beam spots S1 to S15 shown in Fig. 8A are obtained.

As described above in detail, in the laser recording apparatus 10B according to the second embodiment, since the distance R between the array refracting element 36' and the recording film F, the wavelength $\lambda$ of the laser beam L, and the width d for the division direction of the divided region of the laser beam L in the refracting member constituting the array refracting element 36' are determined so that the value $(R \times \lambda)/d$ obtained by dividing the product value $R \times \lambda$ of the distance R and the wavelength $\lambda$ by the width d is not more than the predetermined value, the shift between the condensing spot of the laser beam L and the primary diffraction light can be decreased, consequently, the quality of the image formed on the recording medium can be improved.

Furthermore, in the laser recording apparatus 10B according to the second embodiment, since the above-described predetermined value is set to the half width at half maximum of the condensing spot on the recording film F of the laser beam L, the deterioration of the image quality by the influence of the primary diffraction light can be securely prevented.

In the laser recording apparatuses 10A and 10B according to the embodiments, the array refracting element is placed between the fiber array portion 30 and the recording film F so that the division direction of the laser beam is parallel to the broad area direction of the laser beam, so that the fuzziness of the light beam at a position shifted forward and backward from the focal position in the optical axis direction (depth direction) can be symmetry relative to the optical axis direction, consequently, the image quality of the recording image can be improved and the array refracting element can be formed at low cost as compared with the case where the uniaxial crystal is employed, whereby enabling the apparatus to be formed at low cost.

In the laser recording apparatuses 10A and 10B according to the embodiments, the array refracting element is placed at a position where the far field pattern of the laser beam is formed, so that the array refracting element can act in the same way on all the laser beams L radiated from each semiconductor laser LD.

Further, in the laser recording apparatuses 10A and 10B according to the embodiments, the resolution information, which corresponds to "resolution data" in the embodiments described above, showing the resolution of the image formed on the recording film F by the scanning exposure is inputted, in the case where the resolution indicated by the resolution information is a predetermined first resolution (2·K0 (dpi) in the embodiments described above), the array refracting element is retracted from the optical axis of the laser beam radiated from the semiconductor laser LD, and in the case where the resolution indicated by the resolution information is a predetermined second resolution (K0 (dpi) in the embodiments described above) lower than the first resolution, the array refracting element is moved so as to be positioned on the optical axis, the resolutions can be easily changed only by inputting the resolution information while the image is recorded in the recording film F.

In the second embodiment, the mode of the case where the array refracting element 36' is provided in a part where the laser beam is converged was described, however, the invention is not limited to this, for example, a mode in which the array refracting element 36' is provided in a part where the laser beam is diverged, namely between the fiber array portion 30 and the collimator lens 32 can also be formed.

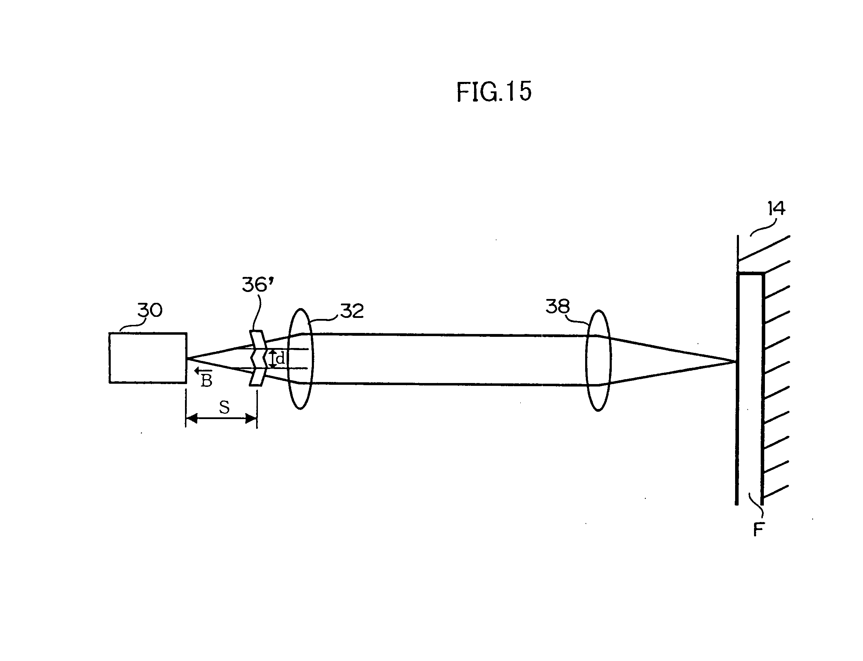

Fig. 15 shows a schematic diagram (plan view) of the laser recording apparatus in this case. In this case, the distance S between the emission position of the laser beam L of the fiber array portion 30 and the array refracting element 36', the wavelength $\lambda$ of the laser beam L, and the width d for the division direction of the divided region of the laser beam L in the refracting member constituting the array refracting element 36' may be determined so that the value (S × $\lambda$) /d obtained by dividing the product value S × $\lambda$ of the distance S and the wavelength $\lambda$ by the width d is not more than the predetermined value.

In this case, the above-described predetermined value is set to the half width at half maximum of the light intensity at the emission position of the laser beam L so that the deterioration of the image quality by the influence of the primary diffraction light can be securely prevented.

In this case, a mode in which the array refracting element 36' is produced in such a manner that the wavelength $\lambda$ and the distance S are determined beforehand according to design conditions such as manufacturing cost and dimensions and the width d is determined so that (S×$\lambda$)/d is not more than the half width at half maximum of the light intensity at the emission position of the laser beam L, and a mode in which the array refracting element 36' is produced by deciding the width d beforehand according to manufacturing conditions such as the manufacturing cost and at least one of the wavelength $\lambda$ and the distance S is determined so that (R×$\lambda$)/d is not more than the half width at half maximum can also be applied.

The same effect as the second embodiment can also be achieved in this case.

Furthermore, though the embodiment was described with reference to the case where the half width at half maximum of the condensing spot on the recording film F of the laser beam L is applied as the predetermined value, the invention is not limited to this, since the influence of the shift between the condensing spot and the primary diffraction light on the image quality also depends on the resolution of the image formed on the recording film F and the like to a certain extent and the required image quality is not always constant, a value near the half width at half maximum can be applied as the predetermined value (for example, a ±10% value of the half width at half maximum). In this case, almost the same effect as the embodiment can be achieved.


(Third Embodiment)


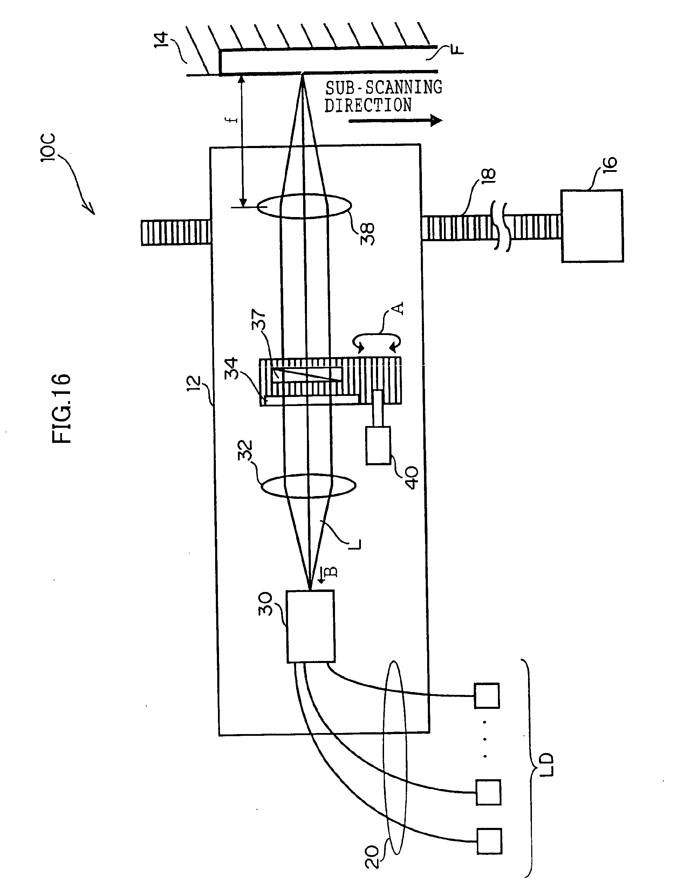

The construction of a laser recording apparatus 10C according to a third embodiment will be described referring to Fig. 16. The same components in Fig. 16 as those of the laser recording apparatus 10A shown in Fig. 1 are indicated by the same reference numerals, and the explanation thereof is omitted.

As shown in Fig. 16, the laser recording apparatus 10C of the third embodiment differs from the laser recording apparatus 10A of the first embodiment only in that a polarization direction control element 34 and a polarization separating element 37 are utilized instead of the array refracting element 36

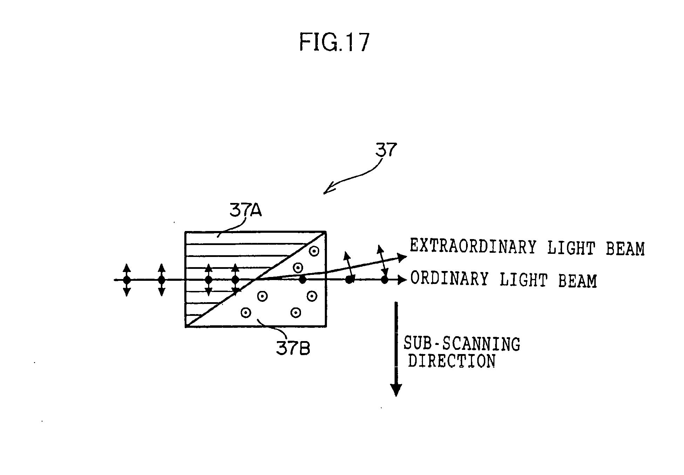

As shown in Fig. 17, the polarization separating element 37 according to the embodiment is the Rochon Prism which is formed by adhering two uniaxial crystals 37A and 37B whose crystal optical axes are orthogonal to each other and separates the laser beam L into an ordinary light beam and an extraordinary light beam relative to the sub-scanning direction of the recording film F. For example, the crystal optical axis of the uniaxial crystal 37A placed on the incident side of the laser beam L is set to be parallel to the optical axis of the laser beam L, and the crystal optical axis of the uniaxial crystal 37B placed on the outgoing side of the laser beam L is set to be orthogonal to the optical axis of the laser beam L and the sub-scanning direction. In this case, the ordinary light beam goes straight through the polarization separating element 37 and the extraordinary light beam is refracted in the sub-scanning direction by the polarization separating element 37.

The Wollaston Prism, in which the crystal optical axis of the uniaxial crystals 37A is orthogonal to each other the optical axis of the laser beam L and set to be parallel to the sub-scanning direction and the crystal optical axis of the uniaxial crystals 37B is set to be orthogonal to each other the optical axis of the laser beam L and the sub-scanning direction, may be applied as the polarization separating element 37.

It is not always necessary in the polarization separating element 37 that the laser beam L is separated into the ordinary light beam and the extraordinary light beam, the polarization separating element 37 may be one which separates the laser beam L into two light beams having the different polarization directions.

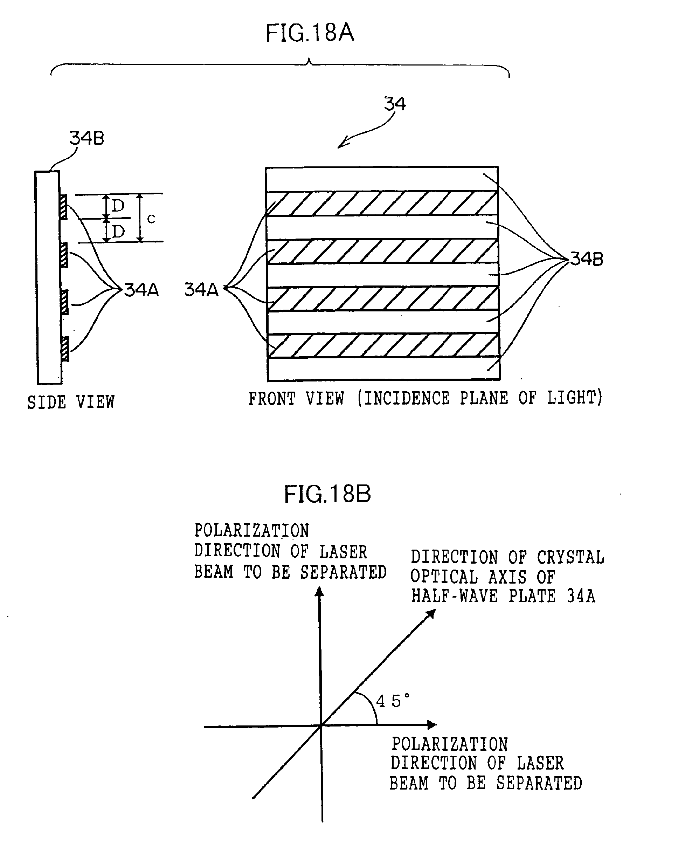

On the other hand, as shown in Figs. 18A and 18B, the polarization direction control element 34 is formed in such a manner that a glass plate 34B is used as the base, a part of the laser beam L is transmitted when the polarization direction control element 34 is provided on an upstream side of the optical axis direction of the polarization separating element 37, and a half-wave plate 34A is placed so that the crystal optical axis is slanted at an angle of about 45° relative to the polarization direction of the light separated from the polarization separating element 37. The plurality of half-wave plates 34A are formed in such a manner that both end portions (parts where the laser beam L is not passed through) each are adhered to the glass plate 34B at the predetermined interval D so that an area ratio of a region where the light of the half-wave plate 34A is incident to a region where the light of the half-wave plate 34B is incident is about 1:1.

As described above, the polarization direction control element 34 is formed in such a manner that the plurality of half-wave plates 34A are arranged at each predetermined interval D in the whole incident region of the laser beam L so that the area ratio of the region where the laser beam L of the half-wave plate 34A is incident to the region where the laser beam L is not incident to the half-wave plate 34A, namely the region where the laser beam L of the half-wave plate 34B is incident is about 1:1. However, on the basis of apparatus specification of the laser recording apparatus 10C and the like, the polarization direction control element 34 can also be formed so that the area ratio of the incident region of the laser beam L in the half-wave plate 34A to the incident region of the laser beam L in the glass plate 34B is almost the same and each quantity of light of the two laser beams obtained by the polarization separating element 37 is almost the same. The polarization direction control element 34 can also be formed by adjusting the arrangement position of the half-wave plate 34A so that the quantity of light of the laser beam L transmitted through the half-wave plate 34A and the quantity of light of the laser beam L not transmitted through the half-wave plate 34A, namely the laser beam L transmitted only through the glass plate 34B are almost the same. Since the constructions of these polarization direction control elements are almost the same as the polarization direction control elements shown in Figs. 18A and 18B, other illustrations of these polarization direction control elements are omitted.

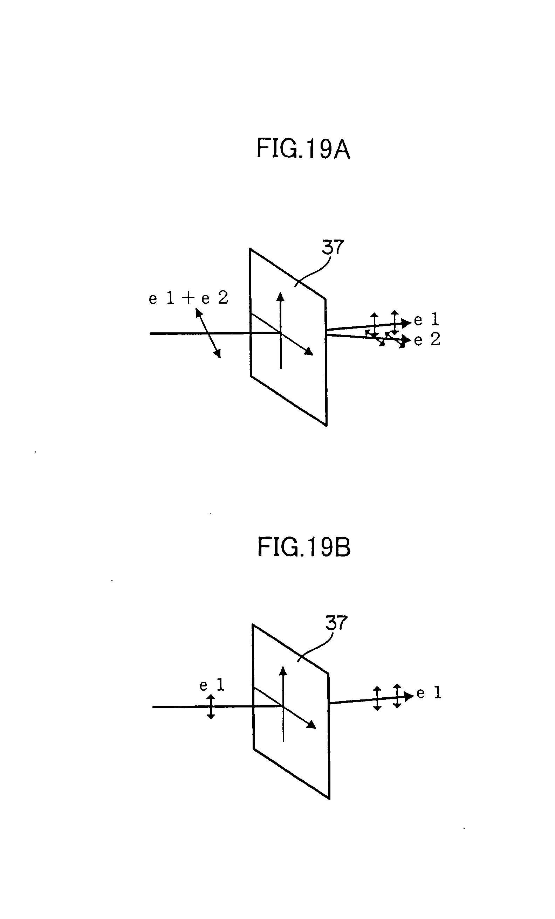

A separating state of the laser beam by the polarization separating element 37 in the case of no utilization of the polarization direction control element 34 thus formed and in the case of utilization of the polarization direction control element 34 will be described. First, the separating state of the laser beam in the case of no utilization of the polarization direction control element 34 will be described referring to Figs. 19A and 19B.

As shown in Fig. 19A, for example, when the laser beam having the polarization of e1+e2, which is the laser beam having the polarization slant at an angle of 45° relative to the polarization e1, is incident to the polarization separating element 37, the laser beam is separated equally into the polarization e1 and the polarization e2.

On the other hand, as shown in Fig. 19B, when the laser beam having the polarization e1 is incident to the polarization separating element 37, only the laser beam having the polarization e1 is radiated from the polarization separating element 37. Accordingly, in this case, it is difficult to separate equally the laser beam into two laser beams.

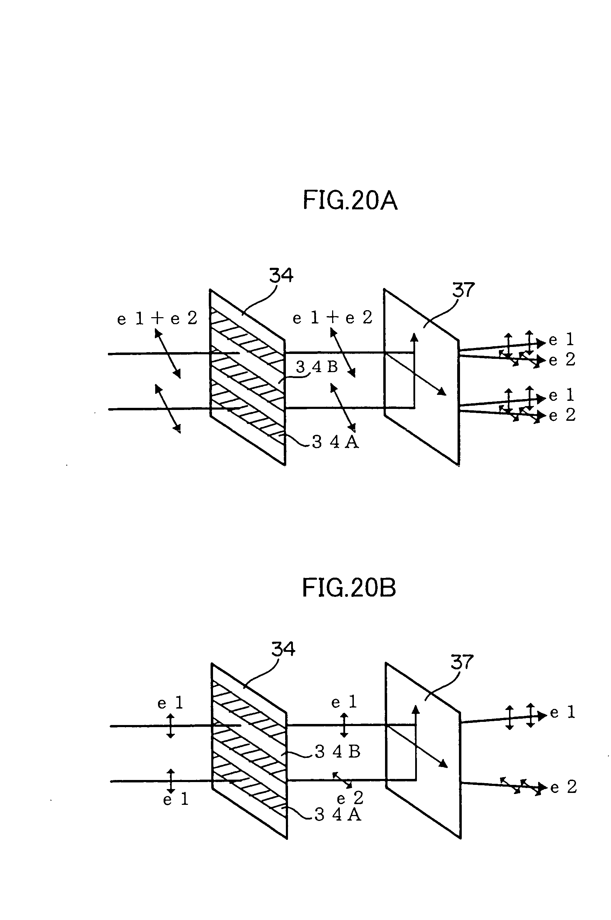

The separating state of the laser beam in the case of utilization of the polarization direction control element 34 will be described referring to Figs. 20A and 20B.

As shown in Fig. 20A, when the laser beam having the polarization of e1+e2, which is the laser beam having the polarization slant at an angle of 45° relative to the polarization e1, is incident to the glass plate 34B, the laser beam is transmitted without changing the polarization direction, incident to the polarization separating element 37, and separated equally into two laser beams of the polarization e1 and the polarization e2. When the laser beam having the polarization of e1+e2 is incident to the half-wave plate 34A, since the crystal optical axis is slant at an angle of 45° relative to the polarization e1, the laser beam is transmitted without changing the polarization direction, incident to the polarization separating element 37, and separated equally into two laser beams of the polarization e1 and the polarization e2.

On the other hand, as shown in Fig. 20B, when the laser beam having the polarization e1 is incident to the glass plate 34B, the laser beam is transmitted without changing the polarization direction and incident to the polarization separating element 37 to radiate the laser beam having only the polarization e1. On the contrary, when the laser beam having the polarization e1 is incident to the half-wave plate 34A, since the crystal optical axis is slant at an angle of 45° relative to the polarization e1 the polarization e1 is changed to the polarization e2 orthogonal to each other the polarization e1, and the laser beam is radiated and incident to the polarization separating element 37 to radiate the laser beam having only the polarization e2. Accordingly, though positions are spatially different, the laser beam can be divided equally from the overall viewpoint.

In the laser recording apparatus 10C according to the embodiment, the focal distance f of the condenser lens 38 shown in Fig. 16, the wavelength $\lambda$ of the laser beam L, and the interval c shown in Figs. 18A and 18B are determined so that a value $(f \times \lambda)/c$ obtained by dividing the product value $f \times \lambda$ of the focal distance f and the wavelength $\lambda$ by the interval c is not more than a predetermined value, which is the half width at half maximum of the light intensity of the condensing spot on the recording film F of the laser beam L in the embodiment (also to Fig. 27).

In the embodiment, the polarization direction control element 34 is produced in such a manner that the focal distance f of the condenser lens 38 and the wavelength $\lambda$ of the laser beam L are determined beforehand according to design conditions such as manufacturing cost and dimensions of the laser recording apparatus 10C and the interval c is determined so that $(f \times \lambda)/c$ is not more than the half width at half maximum of the light intensity of the condensing spot, however, it is not limited to this, for example, it is also possible to make a mode in which the polarization direction control element 34 is produced by deciding the interval c beforehand according to manufacturing conditions such as the manufacturing cost and at least one of the wavelength $\lambda$ of the laser beam L and the focal distance f of the condenser lens 38 is determined so that $(f \times \lambda)/c$ is not more than the half width at half maximum.

Since the construction of the control system of the laser recording apparatus 10C according to the embodiment is the same as that of the laser recording apparatus 10A according to the first embodiment (refer to Fig. 6), its explanation is omitted here.

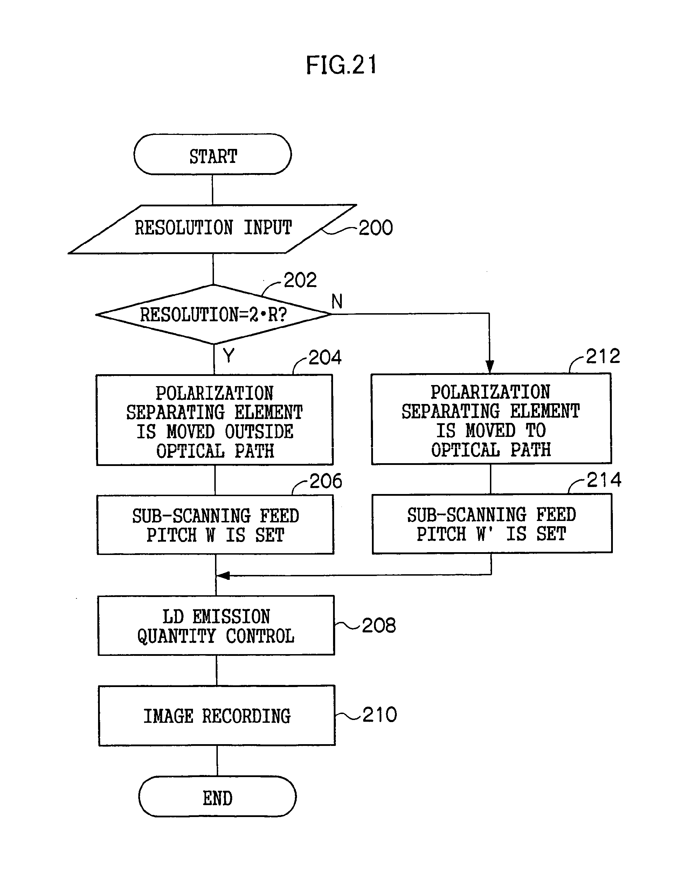

The function of the laser recording apparatus 10C constructed above will be described below referring to a flow chart shown in Fig. 21.

At first, an operator inputs the resolution data showing the resolution of the image to be recorded to the laser recording apparatus 10C (Step 200). The resolution data and the image data of the image to be recorded are supplied to the control data 52, the control circuit 52 supplies a signal adjusted on the basis of the data to the LD drive circuit 54, the element moving motor drive circuit 56, and the sub-scanning motor drive circuit 58. In the embodiment, the following explanation will be described on the assumption that the image can be recorded with two kinds of resolutions of R (dpi) and 2·R (dpi) as the resolution.

In the case where the resolution inputted by the operator is 2·R (dpi), namely in the case where an affirmative judgment is made in Step 202, the element moving motor drive circuit 56 drives the element moving motor 40 to move the polarization separating element 37 so that the polarization separating element 37 is not positioned on the light path of the laser beam L (Step 204). In this case, the sub-scanning motor drive circuit 58 sets the feed pitch W of the exposure head 12 in the sub-scanning direction by the sub-scanning motor 16 as the above-described equation (11) (Step 206).

That is to say, in the case where the resolution is 2·R (dpi), the polarization separating element 37 is removed from the light path of the laser beam L so that the laser beam L is not separated into two laser beams (ordinary light beam and extraordinary light beam) in the sub-scanning direction, which allows the double resolution to be realized as compared with the case where the laser beam L is separated.

As described above, when the setting of the movement of the polarization separating element 37 and the feed pitch in the sub-scanning direction is finished, the LD drive circuit 54 controls drive of each semiconductor laser LD on the basis of the image data (Step 208).

The laser beam L radiated from each semiconductor laser LD is formed in the substantial parallel light flux by the collimator lens 32 and then incident to the polarization direction control element 34. In the laser beam L incident to the polarization direction control element 34, for the laser beam incident to the glass plate 34B, the laser beam is radiated without changing the polarization direction. For the laser beam incident to the half-wave plate 34A, the polarization whose polarization direction corresponds to the crystal optical axis of the half-wave plate 34A is radiated without changing the polarization direction, and the polarization whose polarization direction does not correspond to the crystal optical axis is radiated while the polarization direction is changed to a direction according to an angle defined by the polarization direction and the crystal optical axis.

Then, the laser beam L radiated from the polarization direction control element 34 is condensed on the recording film F of the drum 14 through the condenser lens 38.

In this case, beam spots S1 to S15 (Fig. 8A) having the intensity distribution shown in Fig. 11A are formed on the recording film F. In the beam spots S1 to S15, as shown in Fig. 8A, the exposure head 12 is fed with the feed pitch W in the sub-scanning direction, and the drum 14 in the main scanning direction is rotated so that a two-dimensional image having the resolution of 2·R (dpi) is formed on the recording film F (Step 210).

The case where the resolution is changed from 2·R (dpi) to R (dpi), namely the case where a negative judgment is made in Step 202 will be described below. In this case, the element moving motor drive circuit 56 drives the element moving motor 40 to move the polarization separating element 37 to be positioned on the light path of the laser beam L (Step 212). In this case, the sub-scanning motor drive circuit 58 sets a feed pitch W' of the exposure head 12 in the sub-scanning direction by the sub-scanning motor 16 as the equation (12) (Step 214).

That is to say, in the case where the resolution is R (dpi) , the polarization separating element 37 is positioned on the light path of the laser beam L so that the laser beam L incident to the polarization separating element 37 is separated into two laser beams (ordinary light beam and extraordinary light beam) in the sub-scanning direction, which allows the half resolution to be realized as compared with the case where the laser beam L is not separated.

As described above, when the setting of the movement of the polarization separating element 37 and the feed pitch in the sub-scanning direction is finished, the LD drive circuit 54 controls drive of each semiconductor laser LD based on the image data (Step 208).

The laser beam L radiated from each semiconductor laser LD is formed in the substantial parallel light flux by the collimator lens 32, and then, is incident to the polarization direction control element 34. With respect to the laser beam L incident to the polarization direction control element 34, the laser beam incident to the glass plate 34B is radiated without changing the polarization direction. For the laser beam incident to the half-wave plate 34A, the polarization whose polarization direction corresponds to the crystal optical axis of the half-wave plate 34A is radiated without changing the polarization direction, and the polarization whose polarization direction does not correspond to the crystal optical axis is radiated while the polarization direction is changed to a direction according to an angle defined by the polarization direction and the crystal optical axis.

The laser beam L radiated from the polarization direction control element 34 is supplied to the polarization separating element 37, both the ordinary light beam and the extraordinary light beam are transmitted. The ordinary light beam and the extraordinary light beam are condensed on the recording film F of the drum 14 through the condenser lens 38.

In this case, the beam spots S1' to S15' including two intensity distributions shown in Fig. 11B, namely the intensity distribution of the ordinary light beam and that of the extraordinary light beam are synthesized in the sub-scanning direction, are formed on the recording film F (Fig. 8B).

As shown in Fig. 8B, the drum 14 is rotated in the main scanning direction while the exposure head 12 is fed with the feed pitch W' in the sub-scanning direction so that the two dimensional image having the resolution of R (dpi) is formed on the recording film F by the beam spots S1' to S15' (Step 210) .

As described above, when the resolution of the recording image is changed from 2·R (dpi) to R (dpi), the beam spots S1 to S15 can be easily enlarged to the beam spots S1 to S15' by only inserting the polarization separating element 37 into the light path of the laser beam L, furthermore, since the sub-scanning speed is increased, the image recording can be performed at a high speed.

In the same way, the resolution can be changed from R (dpi) to 2·R (dpi).

The processing of Step 200 corresponds to the input component.

As described above in detail, in the laser recording apparatus 10C according to the third embodiment, since the focal distance f of the condenser lens 38, the wavelength $\lambda$ of the laser beam L, and the interval c are determined so that the value (f× $\lambda$)/c obtained by dividing the product value f× $\lambda$ of the focal distance f and the wavelength $\lambda$ by the interval c is not more than the predetermined value, the shift between the condensing spot of the laser beam L and the primary diffraction light can be decreased, consequently, the quality of the image formed on the recording film F can be improved.

In the laser recording apparatus 10C according to the third embodiment, since the above-described predetermined value is set to the half width at half maximum of the condensing spot on the recording film F of the laser beam L, the deterioration of the image quality by the influence of the primary diffraction light can be securely prevented.

Though the embodiment was described with reference to the case where the half width at half maximum of the condensing spot on the recording film F of the laser beam L is applied as the predetermined value, the invention is not limited to this, since the influence of the shift between the condensing spot and the primary diffraction light on the image quality also depends on the resolution of the image formed on the recording film F and the like to a certain extent and the required image quality is not always constant, a value near the half width at half maximum can be applied as the predetermined value (for example, a ±10% value of the half width at half maximum) . In this case, almost the same effect as the embodiment can be achieved.

(Fourth Embodiment)

In the third embodiment, there was described the mode of the case where the polarization separating element of the invention is provided in a part where the lights are formed in the substantial parallel light flux and the two lights are radiated with different angles, on the other hand, in a fourth embodiment, a mode of the case where the polarization separating element is provided in a part where the light is diverged and two light beams are radiated from different positions relative to the separation directions of the light separated by the polarization separating element will be described.

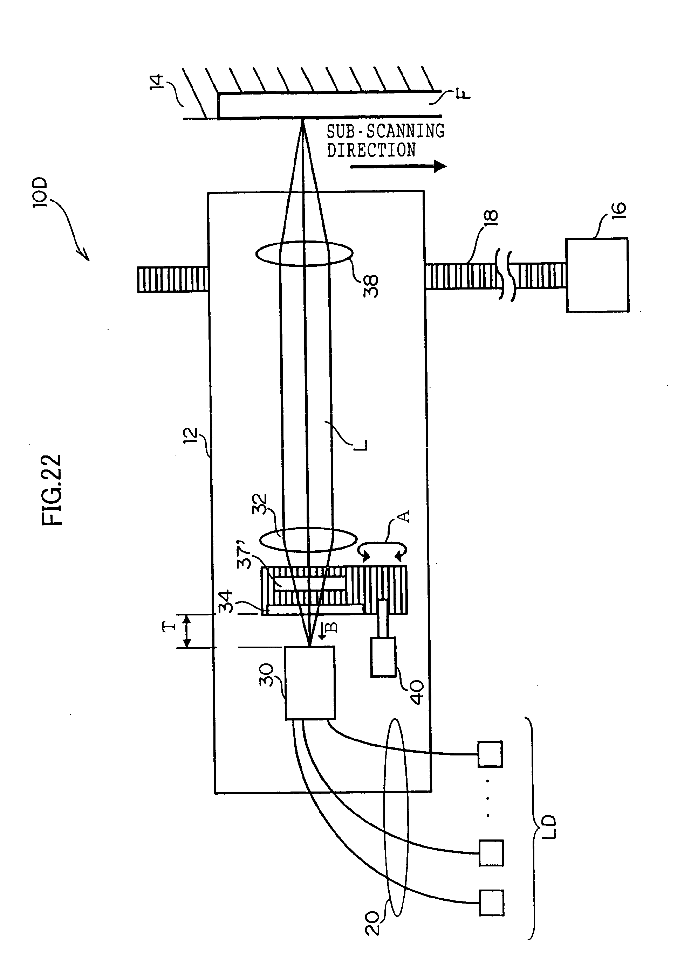

The construction of a laser recording apparatus 10D according to the fourth embodiment will be described referring to Fig. 22. The same components in Fig. 22 as those of the laser recording apparatus 10C shown in Fig. 16 are indicated by the same reference numerals, and the explanation thereof is omitted.

As shown in Fig. 22, the laser recording apparatus 10D according to the fourth embodiment differs from the laser recording apparatus 10C according to the third embodiment only in that the polarization separating element 37' is used instead of the polarization separating element 37, and the polarization direction control element 34 and the polarization separating element 37' are provided between the fiber array portion 30 and the collimator lens 32 and in a part where the laser beam L is diverged. In this case, the direction of the crystal optical axis of the polarization separating element 37' is set to be between the crystal optical axis of the laser beam L and the sub-scanning direction.

In the laser recording apparatus 10D according to the embodiment, the distance T between the emission position of the laser beam L of the fiber array portion 30 shown in Fig. 22 and the polarization direction control element 34, the wavelength $\lambda$ of the laser beam L, and the interval c shown in Figs. 18A and 18B (the periodic interval of the position of the half-wave plate 34A) are determined so that the value $(T \times \lambda)$ /c obtained by dividing the product value $T \times \lambda$ of the distance T and the wavelength $\lambda$ by the interval c is not more than a predetermined value, which is the half width at half maximum of the light intensity of the laser beam L at the emission position of the fiber array portion 30 in the embodiment.

In the embodiment, the polarization direction control element 34 is produced in such a manner that the wavelength $\lambda$ of the laser beam L and the distance T are determined beforehand according to design conditions such as manufacturing cost and dimensions of the laser recording apparatus 10D and the interval c is determined so that $(T \times \lambda)$ /c is not more than the half width at half maximum, however, it is not limited to this, for example, it is also possible to make a mode in which the polarization direction control element 34 is produced by deciding the interval c beforehand according to manufacturing conditions such as the manufacturing cost and at least one of the wavelength $\lambda$ of the laser beam L and the distance T is determined so that $(T \times \lambda)$/c is not more than the half width at half maximum.

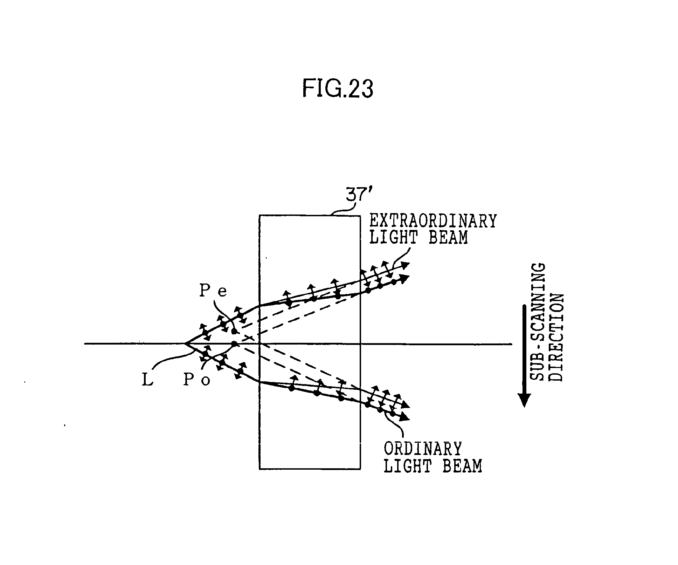

In the case where the resolution is set to R (dpi), as shown in Fig. 23, the laser beam L whose polarization direction is controlled by the polarization direction control element 34 is separated into the ordinary light beam and the extraordinary light beam by the polarization separating element 37 '. In this case, because the refractive index of the polarization separating element 37' for the ordinary light beam is independent of the crystal optical axis direction and is constant, the ordinary light beam is radiated from a virtual emission point Po on the optical axis of the laser beam L to be guided to the collimator lens 32. On the other hand, the refractive index of the polarization separating element 37' for the extraordinary light beam is dependent on the incident direction of the laser beam L and the crystal optical axis direction, and the crystal optical axis is set to be between the optical axis of the laser beam L and the sub-scanning direction, so that the extraordinary light beam is radiated from a virtual emission point Pe which is shifted by a predetermined quantity from the optical axis of the laser beam L to the sub-scanning direction to be guided to the collimator lens 32.

As a result, the beam spots S1' to S15' shown in Fig. 8B are obtained in such a manner that the ordinary light beam and the extraordinary light beam are condensed at a position which is shifted by the predetermined quantity on the recording film F in the sub-scanning direction through the collimator lens 32 and the condenser lens 38. This allows the image having the resolution of R (dpi) to be formed.

On the other hand, when the image having the resolution of 2·R (dpi) is formed, the polarization separating element 37' may be moved so as not to be positioned on the light path of the laser beam L and controlled so as to obtain the beam spots S1 to S15 shown in Fig. 8A.

As described above in detail, in the laser recording apparatus 10D according to the fourth embodiment, since the distance T between the fiber array portion 30 and the polarization direction control element 34, the wavelength $\lambda$ of the laser beam L, and the interval c are determined so that the value $(T \times \lambda)$/c obtained by dividing the product value $T \times \lambda$ of the distance T and the wavelength $\lambda$ by the interval c is not more than the predetermined value, the shift between the condensing spot of the laser beam L and the primary diffraction light can be decreased, consequently, the quality of the image formed on the recording film F can be improved.

Furthermore, in the laser recording apparatus 10D according to the fourth embodiment, since the above-described predetermined value is set to the half width at half maximum of light intensity at the emission position of the laser beam L, the deterioration of the image quality by the influence of the primary diffraction light can be securely prevented.

The polarization direction control element 34 according to the third and fourth embodiments is one which is provided on the upstream side of the optical axis of the laser beam L relative to the polarization separating element 37 separating the laser beam L into two laser beams whose polarization directions are crossed at right angles each other, when the polarization direction control element 34 is provided on the upstream side of the optical axis direction of the polarization separating element 37, a part of the laser beam L is transmitted and the half-wave plate 34A is arranged so that the crystal optical axis is slanted at an angle of about 45° relative to the polarization direction of the light separated by the polarization separating element 37, so that the laser beam L can be separated in an equal quantity of light by the polarization separating element 37 in combination with the polarization separating element 37, consequently, the image quality of the recording image can be improved in the laser recording apparatus with the polarization separating element 37.

The polarization direction control element 34 according to the third and fourth embodiments is formed so that the area ratio of the region where the laser beam L of the half-wave plate 34A is incident to the region where the laser beam L is not incident to the half-wave plate 34A, namely the laser beam L of the half-wave plate 34B is directly incident is about 1 : 1, so that the intensity distribution of the separated laser beam can be homogenized.

The polarization direction control element 34 according to the third and fourth embodiments is formed so that the plurality of half-wave plates 34A are arranged at each predetermined interval in the whole incident region of the laser beam L, so that the polarization direction control element 34 can be easily produced.

In the laser recording apparatuses 10C and 10D according to the third and fourth embodiments, since the above-described polarization direction control element 34 is arranged between the semiconductor laser LD and the polarization separating element 37 so that the optical axis of the half-wave plate 34A is slanted at an angle of about 45° relative to the polarization direction of the laser beam L separated by the polarization separating element 37, the laser beam L can be separated in an equal quantity of light by the polarization separating element 37, and consequently, the image quality of the recording image can be improved when the image is recorded on the recording film F by the separated laser beam L.

Since the laser recording apparatuses 10C and 10D according to the third and fourth embodiments are equipped with the element moving motor 40 moving the polarization separating element 37 so that the polarization separating element 37 is inserted into or drawn from the optical axis of the laser beam L, when the image is recorded on the recording film F, the polarization separating element 37 is inserted into or drawn from the optical path by the element moving motor 40 so that the resolutions can be easily changed.

In the laser recording apparatuses 10A to 10D according to the above-described embodiments, the plurality of semiconductor lasers LD are arranged along the divided (or separated) direction of the laser beam L by the array refracting element or the polarization separating element, and the laser beam L radiated from each semiconductor laser LD is divided (or separated) by the array refracting element or the polarization separating element to be guided to the recording film F, so that the image can be recorded at high speed.

In the fourth embodiment, the mode of the case where the polarization direction control element 34 and the polarization separating element 37' are provided in a part where the laser beam is diverged was described, however, the invention is not limited to this, for example, a mode in which the polarization direction control element 34 and the polarization separating element 37 are provided in a part where the laser beam is converged, namely between the condenser lens 38 and the recording film F can also be formed.

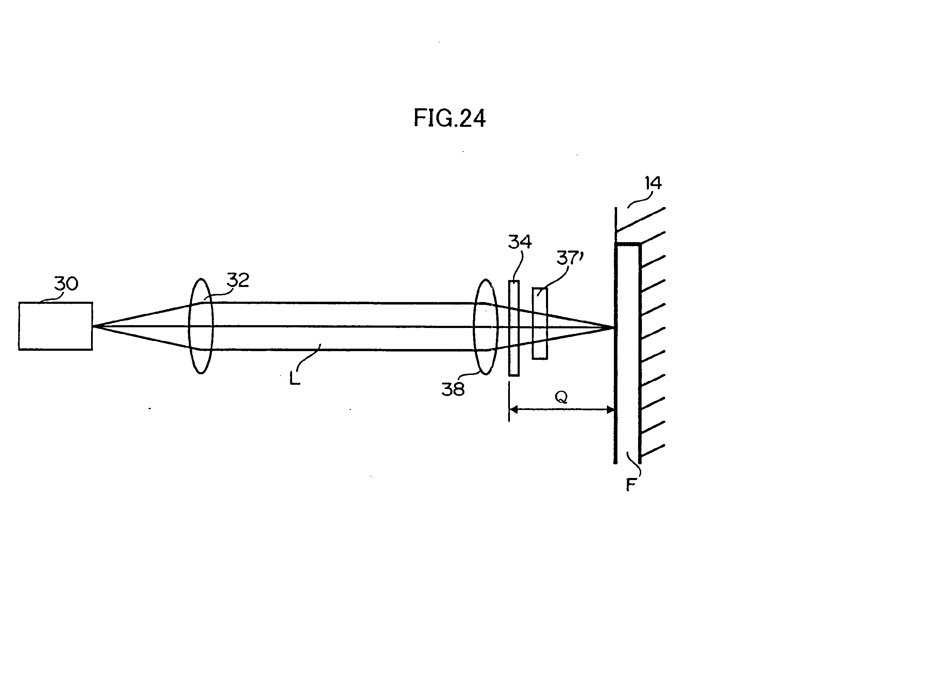

Fig. 24 shows a schematic diagram (plan view) of the laser recording apparatus in this case. In this case, the distance Q between the polarization direction control element 34 and the recording film F, the wavelength $\lambda$ of the laser beam L, and the interval c may be determined so that the value $(Q \times \lambda)/c$ obtained by dividing the product value $Q \times \lambda$ of the distance Q and the wavelength $\lambda$ by the interval c is not more than the predetermined value.

In this case, the above-described predetermined value is set to the half width at half maximum of the light intensity at the condensing spot of the laser beam L so that the deterioration of the image quality by the influence of the primary diffraction light can be securely prevented.

In this case, a mode in which the polarization direction control element 34 is produced in such a manner that the wavelength $\lambda$ and the distance Q are determined beforehand according to design conditions such as manufacturing cost and dimensions of the laser recording apparatus and the interval c is determined so that $(Q \times \lambda)/c$ is not more than the half width at half maximum of the light intensity at the emission position of the laser beam L, and a mode in which the polarization direction control element 34 is produced by deciding the interval c beforehand according to manufacturing conditions such as the manufacturing cost and at least one of the wavelength $\lambda$ and the distance Q is determined so that $(Q \times \lambda)/c$ is not more than the half width at half maximum can also be applied.

The same effect as the fourth embodiment can also be achieved in this case.

Furthermore, though the fourth embodiment was described with reference to the case where the half width at half maximum of the light intensity at the emission position of the laser beam L is applied as the predetermined value, the invention is not limited to this, since the influence of the shift between the condensing spot and the primary diffraction light on the image quality also depends on the resolution of the image formed on the recording film F and the like to a certain extent and the required image quality is not always constant, a value near the half width at half maximum can be applied as the predetermined value (for example, a $\pm 10\%$ value of the half width at half maximum). Also in this case, almost the same effect as the embodiment can be achieved.

Though the third and fourth embodiments were described with reference to the case where the element moving motor 40 can insert and draw only the polarization separating element 37 into and from the optical path of the laser beam L, the invention is not limited to this, the mode which the element moving motor 40 can insert and draw both the polarization direction control element 34 and the polarization separating element 37 into and from the optical path of the laser beam L simultaneously can also be formed. In this case, the same effects as the third and fourth embodiments can be achieved.

In the embodiments, there were described the case where the invention is applied to the laser recording apparatuses 10A to 10D performing multi-beam scanning, the invention is not limited the above-described embodiments, for example, the invention can also be applied to the laser recording apparatus in which the light source is formed by one semiconductor laser and which performs single beam scanning. In this case, the same effects as the above-described embodiments can be achieved.

**Claims**

1. An exposure apparatus for forming an image on a recording medium by scanning exposure, the apparatus comprising:

   a light source radiating a light beam light emitting over a broad area for at least a sub-scanning direction;
   a condensing optical system including a first lens which is disposed between the light source and the recording medium and makes the light beam radiated from the light source a substantial parallel light flux, and a second lens which is disposed between the first lens and the recording medium and condenses the light beam onto the recording medium; and
   an array refracting element in which refracting members having a unit surface shape that divides one light beam into two light beams are arranged in pairs in a shape of an array, and which is disposed between the first lens and the second lens so that a division direction of the light beam is substantially parallel to a broad area direction of the light beam radiated from the light source,

   wherein a focal distance f of the second lens, a wavelength $\lambda$ of the light beam, and a width d for the division direction of a divided region of the light beam in the refracting member are determined so that a value $(f \times \lambda)/d$ obtained by dividing a product value $f \times \lambda$ of the focal distance f and the wavelength $\lambda$ by the width d is not more than a predetermined value.

2. An exposure apparatus forming an image on a recording medium by scanning exposure, the apparatus comprising:

   a light source for radiating a light beam light emitting over a broad area for at least a sub-scanning direction;
   a condensing optical system including a first lens which is disposed between the light source and the recording medium and makes the light beam radiated from the light source a substantial parallel light flux, and a second lens which is disposed between the first lens and the recording medium and condenses the light beam onto the recording medium; and
   an array refracting element in which refracting members having a unit surface shape that divides one light beam into two light beams are arranged in pairs in a shape of an array, and which is disposed between the second lens and the recording medium so that a division direction of the light beam is substantially parallel to a broad area direction of the light beam radiated from the light source,

   wherein a distance R between the array refracting element and the recording medium, a wavelength $\lambda$ of the light beam, and a width d for the division direction of a divided region of the light beam in the refracting member are determined so that a value $(R \times \lambda)/d$ obtained by dividing a product value $R \times \lambda$ of the distance R and the wavelength $\lambda$ by the width d is not more than a predetermined value.

3. The exposure apparatus of claims 1 or 2, wherein the predetermined value is a value in a vicinity of a half width at half maximum of a condensing spot of the light beam onto the recording medium.

4. An exposure apparatus forming an image on a recording medium by scanning exposure, the apparatus comprising:

   a light source for radiating a light beam light emitting over a broad area for at least a sub-scanning direction;
   a condensing optical system including a first lens which is disposed between the light source and the recording medium and makes the light beam radiated from the light source a substantial parallel light flux, and a second lens which is disposed between the first lens and the recording medium and condenses the light beam onto the recording medium; and
   an array refracting element in which refracting members having a unit surface shape that divides one light beam into two light beams are arranged in pairs in a shape of an array, and which is disposed between the light source and the first lens so that a division direction of the light beam is substantially parallel to a broad area direction of the light beam radiated from the light source,

wherein a distance S between the light source and the array refracting element, a wavelength $\lambda$ of the light beam, and a width d for the division direction of a divided region of the light beam in the refracting member are determined so that a value $(S \times \lambda)/d$ obtained by dividing a product value $S \times \lambda$ of the distance S and the wavelength $\lambda$ by the width d is not more than a predetermined value.

5. The exposure apparatus of claim 4, wherein the predetermined value is a value in a vicinity of a half width at half maximum at an emission position of the light beam.

6. The exposure apparatus of any one of claims 1 to 5, further comprising:

an input component for inputting resolution information indicating a resolution of the image formed on the recording medium by the scanning exposure; and
a moving component for moving the array refracting element such that the array refracting element is retracted from an optical axis of the light beam radiated from the light source when the resolution indicated by the resolution information is a predetermined first resolution, and the array refracting element is positioned on the optical axis when the resolution indicated by the resolution information is a second resolution , which is lower than the first resolution.

7. An exposure apparatus for forming an image on a recording medium by scanning exposure, the apparatus comprising:

a light source for radiating a light beam light emitting over a broad area for at least a sub-scanning direction;
a condensing optical system including a first lens which is disposed between the light source and the recording medium and makes the light beam radiated from the light source a substantial parallel light flux, and a second lens which is disposed between the first lens and the recording medium and condenses the light beam onto the recording medium;
a polarization separating element which is disposed between the first lens and the second lens and separates the light beam into two light beams whose polarization directions are orthogonal to each other; and
a polarization direction control element which is placed between the first lens and the polarization separating element and in which a plurality of half-wave plates are disposed at one period of each predetermined interval c in an entire incident region of the light beam so that a crystal optical axis is slanted at an angle within a predetermined region including 45° relative to a polarization direction of the light beam separated by the polarization separating element,

wherein a focal distance f of the second lens, a wavelength $\lambda$ of the light beam, and the predetermined interval c are determined so that a value $(f \times \lambda)/c$ obtained by dividing a product value $f \times \lambda$ of the focal distance f and the wavelength $\lambda$ by the predetermined interval c is not more than a predetermined value.

8. An exposure apparatus for forming an image on a recording medium by scanning exposure, the apparatus comprising:

a light source for radiating a light beam light emitting over a broad area for at least a sub-scanning direction;
a condensing optical system including a first lens which is disposed between the light source and the recording medium and makes the light beam radiated from the light source a substantial parallel light flux, and a second lens which is disposed between the first lens and the recording medium and condenses the light beam onto the recording medium;
a polarization separating element which is disposed between the second lens and the recording medium and separates the light beam into two light beams whose polarization directions are orthogonal to each other; and
a polarization direction control element which is placed between the second lens and the polarization separating element and in which a plurality of half-wave plates are disposed at one period of each predetermined interval c in an entire incident region of the light beam so that a crystal optical axis is slanted at an angle within a predetermined region including 45° relative to a polarization direction of the light beam separated by the polarization separating element,

wherein a distance Q between the polarization direction control element and the recording medium, a wavelength $\lambda$ of the light beam, and the predetermined interval c are determined so that a value $(Q \times \lambda)/C$ obtained by dividing a product value $Q \times \lambda$ of the distance Q and the wavelength $\lambda$ by the predetermined interval c is not more than a predetermined value.

9. The exposure apparatus of claim 7 or 8, wherein the predetermined value is a value in a vicinity of a half width at half maximum of a condensing spot of the beam onto the recording medium.

10. An exposure apparatus for forming an image on a recording medium by scanning exposure, the apparatus comprising:

a light source for radiating a light beam light emitting over a broad area for at least a sub-scanning direction;
a condensing optical system including a first lens which is disposed between the light source and the recording medium and makes the light beam radiated from the light source a substantial parallel light flux, and a second lens which is disposed between the first lens and the recording medium and condenses the light beam onto the recording medium;
a polarization separating element which is placed between the light source and the first lens and separates the light beam into two light beams whose polarization directions are orthogonal to each other; and
a polarization direction control element which is disposed between the light source and the polarization separating element and in which a plurality of half-wave plates are disposed at one period of each predetermined interval c in an entire incident region of the light beam so that a crystal optical axis is slanted at an angle within a predetermined region including 45° relative to a polarization direction of the light beam separated by the polarization separating element,

wherein a distance T between the light source and the polarization direction control element, a wavelength $\lambda$ of the light beam, and the predetermined interval c are determined so that a value $(T \times \lambda)/c$ obtained by dividing a product value $T \times \lambda$ of the distance T and the wavelength $\lambda$ by the predetermined interval c is not more than a predetermined value.

11. The exposure apparatus of claim 10, wherein the predetermined value is a value in a vicinity of a half width at half maximum at an emission position of the light beam.

12. The exposure apparatus of any one of claims 7 to 11, further comprising:

an input component for inputting resolution information indicating a resolution of the image formed on the recording medium by the scanning exposure; and
a moving component for moving the polarization separating element such that the polarization separating element is retracted from an optical axis of the light beam radiated from the light source when the resolution indicated by the resolution information is a predetermined first resolution, and the polarization separating element is positioned on the optical axis when the resolution indicated by the resolution information is a second resolution, which is lower than the first resolution.

FIG.1

FIG.2

30

30A

20

30A

SUB-SCANNING
DIRECTION

FIG.3

36

36A

L

36B

SUB-SCANNING
DIRECTION

## FIG.4A

CONDENSING SPOT

$2 \cdot \epsilon$

CONDENSING SPOT

$4 \cdot \epsilon$

SUB-SCANNING
DIRECTION

## FIG.4B

CONDENSING SPOT

$\epsilon$

CONDENSING SPOT

SUB-SCANNING
DIRECTION

FIG.5

FIG.6

EP 1 345 064 A2

FIG.7

```
                        ┌──────────────────┐
                        │      START       │
                        └──────────────────┘
                                 │
                 ┌───────────────────────────────┐
                /  RESOLUTION S INPUT            /
               /    ⎛  S=K0 dpi       ⎞         /── 100
              /     ⎝ OR S=2·K0 dpi   ⎠        /
             └───────────────────────────────┘
                                 │
                             ╱───102───╲
                          ╱                ╲        N
                       ╱   S=2·K0 dpi?        ╲──────────────────┐
                          ╲                ╱                     │
                             ╲───────────╱                       │
                                 │ Y                             │
```

|  | 104 |  | 112 |
|---|---|---|---|
| ARRAY REFRACTING ELEMENT IS RETRACTED FROM OPTICAL PATH | | ARRAY REFRACTING ELEMENT IS INSERTED INTO OPTICAL PATH TO DISTRIBUTE EQUALLY RADIATED LIGHT | |

|  | 106 |  | 114 |
|---|---|---|---|
| SUB-SCANNING FEED PITCH W IS SET TO N·ε INCH | | SUB-SCANNING FEED PITCH W' IS SET TO N×2·ε INCH | |

|  | 108 |  | 116 |
|---|---|---|---|
| EMISSION QUANTITY IS SET CORRESPONDING TO DATA WHICH IS SET DEPENDING ON RECORDING PHOTOGRAPHIC DENSITY | | EMISSION QUANTITY IS SET CORRESPONDING TO DATA WHICH IS SET DEPENDING ON RECORDING PHOTOGRAPHIC DENSITY | |

| IMAGE RECORDING | ~110 |
|---|---|

```
                        ┌──────────────────┐
                        │       END        │
                        └──────────────────┘
```

FIG.8A

NUMBER OF SCANS

FIRST SCAN

SECOND SCAN

THIRD SCAN

$2 \cdot \varepsilon$

S1 S2 S3 S4 S5 S6 S7 S8 S9 S10 S11 S12 S13 S14 S15

FIG.8B

NUMBER OF SCANS

FIRST SCAN

SECOND SCAN

$\varepsilon$ SHIFT TOWARD SUB-SCANNING DIRECTION

S1' S2' S3' S4' S5' S6' S7' S8' S9' S10' S11' S12' S13' S14' S15'

FIG.9A

36

L

38

FOCAL POSITION
(SCANNED SURFACE)

FIG.9B

36

L

EP 1 345 064 A2

# FIG.10A          FIG.10B          FIG.10C

ARRAY REFRACTING
ELEMENT

ARRAY REFRACTING
ELEMENT

ARRAY REFRACTING
ELEMENT

EP 1 345 064 A2

FIG.11A

FIG.11B

INTENSITY

INTENSITY

SUB-SCANNING
DIRECTION

SUB-SCANNING
DIRECTION

FIG.12

SUB-SCANNING DIRECTION

EP 1 345 064 A2

FIG.13A

38

36'

L

FOCAL POSITION
(SCANNED SURFACE)

FIG.13B

36'

L

FOCAL POSITION
(SCANNED SURFACE)

EP 1 345 064 A2

# FIG.14

EP 1 345 064 A2

# FIG.15

EP 1 345 064 A2

FIG.16

SUB-SCANNING DIRECTION

EP 1 345 064 A2

FIG.17

## FIG.18A

SIDE VIEW

FRONT VIEW (INCIDENCE PLANE OF LIGHT)

## FIG.18B

POLARIZATION DIRECTION OF LASER BEAM TO BE SEPARATED

DIRECTION OF CRYSTAL OPTICAL AXIS OF HALF-WAVE PLATE 34A

45°

POLARIZATION DIRECTION OF LASER BEAM TO BE SEPARATED

# FIG.19A

# FIG.19B

## FIG.20A

## FIG.20B

# FIG.21

```
              ┌──────────────┐
              │    START     │
              └──────┬───────┘
                     │
           ╱─────────┴──────────╲
          ╱  RESOLUTION INPUT    ╲──── 200
          ╲                      ╱
           ╲─────────┬──────────╱
                     │         ┌── 202
                ╱────┴────╲
           ────╱            ╲──── N ──────────────┐
              ╲ RESOLUTION=2·R? ╱                 │
               ╲──────┬────────╱                  │
                   Y  │                           │
            ┌── 204   │                   ┌── 212 ▼
   ┌────────────────────────┐   ┌────────────────────────┐
   │      POLARIZATION       │   │      POLARIZATION       │
   │  SEPARATING ELEMENT     │   │  SEPARATING ELEMENT     │
   │   IS MOVED OUTSIDE       │   │    IS MOVED TO          │
   │    OPTICAL PATH          │   │    OPTICAL PATH         │
   └───────────┬─────────────┘   └───────────┬─────────────┘
               │  ┌── 206                     │  ┌── 214
   ┌────────────────────────┐   ┌────────────────────────┐
   │  SUB-SCANNING FEED      │   │  SUB-SCANNING FEED      │
   │  PITCH W IS SET         │   │  PITCH W' IS SET        │
   └───────────┬─────────────┘   └───────────┬─────────────┘
               │◄──────────────────────────────┘
               │
   ┌────────────────────────┐
   │      LD EMISSION        │─── 208
   │   QUANTITY CONTROL      │
   └───────────┬─────────────┘
               │
   ┌────────────────────────┐
   │   IMAGE RECORDING       │─── 210
   └───────────┬─────────────┘
               │
        ┌──────┴───────┐
        │     END      │
        └──────────────┘
```

FIG.22

SUB-SCANNING
DIRECTION

FIG.23

37'

EXTRAORDINARY
LIGHT BEAM

Pe

L   Po

SUB-SCANNING
DIRECTION

ORDINARY
LIGHT BEAM

EP 1 345 064 A2

FIG.24

# FIG.25

OPTICAL FIBER

PERIODIC APERTURE GRID

f

LIGHT BEAM

SURFACE LIGHT SOURCE

CONTRACTION

PRIMARY DIFFRACTION LIGHT

$p1 \cdot f$

ZERO-ORDER LIGHT

EP 1 345 064 A2

## FIG.26A

PRIMARY
DIFFRACTION LIGHT

PRIMARY
DIFFRACTION LIGHT

PRIMARY
DIFFRACTION LIGHT

CONDENSING SPOT

SUB-SCANNING
DIRECTION

## FIG.26B

PRIMARY
DIFFRACTION LIGHT

PRIMARY
DIFFRACTION LIGHT

PRIMARY
DIFFRACTION LIGHT

CONDENSING SPOT

SUB-SCANNING
DIRECTION

CONDENSING SPOT

INTENSITY

SUB-SCANNING DIRECTION

HALF WIDTH AT HALF MAXIMUM

FULL WIDTH AT HALF MAXIMUM

FIG.27

EP 1 345 064 A2

# FIG.28
## PRIOR ART

TRANSPARENT PARALLEL PLATE

POLARIZATION DIRECTION CONTROL ELEMENT

POLARIZATION SEPARATING ELEMENT

$\alpha$

$\alpha$

$\alpha$

$\alpha$

$\beta$

$I \alpha y$

$I \alpha x$

$I \beta y$

$I \beta x$

HALF-WAVE PLATE
(CRYSTAL OPTICAL AXIS IS SLANTED AT AN ANGLE OF 45°)

# FIG.29

PERIODIC APERTURE GRID

INCIDENT LIGHT
WAVELENGTH λ

TRANSMITTED LIGHT

DIFFRACTION LIGHT

EP 1 345 064 A2

## FIG.30

EP 1 345 064 A2